# EUROPEAN PATENT SPECIFICATION

(11) **EP 4 634 833 B1**
(45) Date of publication and mention of the grant of the patent: **26.08.2026**
(21) Application number: 22835771.1
(22) Date of filing: 14.12.2022
(51) Int. Cl.: G06N 3/098, G06N 3/045

(54) **USING DISTRIBUTED LEARNING TO DEVELOP A MACHINE LEARNING MODEL**
VERWENDUNG VON VERTEILTEM LERNEN ZUR ENTWICKLUNG EINES MODELLS FÜR MASCHINELLES LERNEN
UTILISATION DE L'APPRENTISSAGE DISTRIBUÉ POUR DÉVELOPPER UN MODÈLE D'APPRENTISSAGE MACHINE

(43) Date of publication of application: 22.10.2025
(73) Proprietor: Telefonaktiebolaget LM Ericsson (publ), 164 83 Stockholm (SE)
(72) Inventor: EBRAHIMI, Masoumeh, 171 58 Solna (SE); JOHNSSON, Andreas, 164 80 Stockholm (SE); TAGHIA, Jalil, 164 80 Stockholm (SE); LARSSON, Hannes, 164 80 Stockholm (SE); MORADI, Farnaz, 164 80 Stockholm (SE); LAN, Xiaoyu, 164 80 Stockholm (SE)
(74) Representative: Ericsson
(86) International application number: PCT/EP2022/085966
(87) International publication number: WO 2024/125787

(56) References cited:
- TIANYI CHEN ET AL: "LAG: Lazily Aggregated Gradient for Communication-Efficient Distributed Learning", ARXIV.ORG, CORNELL UNIVERSITY LIBRARY, 201 OLIN LIBRARY CORNELL UNIVERSITY ITHACA, NY 14853, 25 May 2018 (2018-05-25), XP080882266
- YANG CHEN ET AL: "Communication-Efficient Federated Deep Learning with Asynchronous Model Update and Temporally Weighted Aggregation", ARXIV.ORG, CORNELL UNIVERSITY LIBRARY, 201 OLIN LIBRARY CORNELL UNIVERSITY ITHACA, NY 14853, 18 March 2019 (2019-03-18), XP081154703
- CHEN HAO ET AL: "Federated Learning Over Wireless IoT Networks With Optimized Communication and Resources", IEEE INTERNET OF THINGS JOURNAL, vol. 9, no. 17, 1 September 2022 (2022-09-01), pages 16592 - 16605, XP093049267, Retrieved from the Internet <URL:https://ieeexplore.ieee.org/stampPDF/getPDF.jsp?tp=&arnumber=9712615&ref=aHR0cHM6Ly93d3cuZ29vZ2xlLmNvbS8=> DOI: 10.1109/JIOT.2022.3151193
- ELGABLI ANIS ET AL: "L-FGADMM: Layer-Wise Federated Group ADMM for Communication Efficient Decentralized Deep Learning", 2020 IEEE WIRELESS COMMUNICATIONS AND NETWORKING CONFERENCE (WCNC), IEEE, 25 May 2020 (2020-05-25), pages 1 - 6, XP033782843, DOI: 10.1109/WCNC45663.2020.9120758
- CHEN TIANYI ET AL: "Communication-Adaptive Stochastic Gradient Methods for Distributed Learning", IEEE TRANSACTIONS ON SIGNAL PROCESSING, IEEE, USA, vol. 69, 27 July 2021 (2021-07-27), pages 4637 - 4651, XP011872751, ISSN: 1053-587X, [retrieved on 20210819], DOI: 10.1109/TSP.2021.3099977

## Description

### Technical Field

The present disclosure relates to methods for using distributed learning to develop a Machine Learning (ML) model. The methods may be performed by first and second nodes, for example of a communication network. The present disclosure also relates to a first node, a second node, and to a computer program product configured, when run on a computer, to carry out methods for using distributed learning to develop an ML model.

### Background

For the purpose of the present specification, Distributed Learning refers to a group of learning techniques in which at least some training is performed on multiple distributed nodes. Federated learning is an example of a distributed learning technique, and is a method for training a global Machine Learning (ML) model collaboratively. Federated Learning involves a server node and several clients (e.g., edge devices, or core network nodes), and a large number of clients usually participate in federation. The learning starts with the server initializing a global model with a fixed architecture and sending that model to candidate clients. Versions of the model are trained in the clients for some number of epochs using their local data. Updates to the global model are then sent to the server where they are aggerated (e.g., by averaging) and then sent back to the clients. This leads to a shared global trained model that combines the knowledge from the clients without the clients being required to share their raw data.

In Federated Learning (FL), usually a large number of clients participates in federation. After downloading the model from the server, a client performs training (e.g., multiple iterations of stochastic gradient descent) on its local data. In the naïve form of federation, each client sends a full model update (e.g., Gradients, hyper parameters, or weights) to the server. This is repeated until the model training converges.

In some FL use cases, agents communicate over the same radio channel or network path, and such cases, the communication channel can become a bottleneck. The communication cost can be very high, which considering for example tens to hundreds of federation rounds, and millions of model weight parameters that should be exchanged between the server and clients in each federation round.

FL therefore requires sending and receiving a large amount of data by client and server nodes in each round of federation. Although larger bandwidth is expected in the server node, transmitting all model parameters to many clients still leads to large communication cost and power consumption. Communication cost is determined by the number of parameters (i.e., converted to a number of bits) exchanged between the server node and clients. Several proposals have tried to reduce the communication overhead of FL, mainly through either: 1) sending only updated parameters; 2) reducing model size; and/or 3) reducing federation rounds by faster convergence. Examples of each of these approaches are discussed below.

Sending only updated parameters: In some existing proposals, such as Jakub Konečnń, H. B. McMahan, F. X. Yu, P. Richtarik, A. T. Suresh, and D. Bacon, "Federated Learning: Strategies to improve communication efficiency", NIPS Workshop on Private Multi-Party Machine Learning, 2016, only a part of the model is updated in the client and transferred to the server node. This can be done, for example, by freezing some layers and enforcing other layers to be updated. In other proposals, model parameters that have been updated by the client are identified, and only the updated parameters are transmitted.

Reducing model size: This includes gradient or model compression by applying data compression techniques. Other approaches to reduce the model size are, for example, pruning, sub-sampling, encoding, and quantization. This approach is also used in the above referenced work by Konečnńet al.

Reducing federation rounds: Communication cost can be also reduced through algorithms that lead to faster convergence and thus fewer federation rounds, as proposed for example in X. Yao, C. Huang and L. Sun, "Two-Stream Federated Learning: Reduce the Communication Costs," 2018 IEEE Visual Communications and Image Processing (VCIP), 2018, pp. 1-4, doi: 10.1109/VCIP.2018.8698609. Another approach to improve efficiency of federated learning can be found in Tianyi Chen ET AL: "LAG: Lazily Aggregated Gradient for Communication-Efficient Distributed Learning", 2018.

In a heuristic approach, clients exchange the parameters among each other in turn (i.e., ring topology), and perform pre-aggregation. The final result is then sent to the server. This approach reduces the amount of communication between clients and the server node, but security is a concern owing to the extensive parameter exchange between clients.

Owing to the limited bandwidth in 3GPP radio uplinks when compared to downlinks, the communication cost is usually discussed for the communication from clients to the server node, as in the above referenced works. In these proposals, the locally trained models are sent to the server, and the server aggregates them to create a global trained model. This global model is then sent to all candidate clients, and the procedure is repeated for a given number of federation rounds. However, in these proposals, the communication cost from the server node to the clients is ignored, and usually the whole global model is transferred to clients in each federation round.

Among prior work, reduction in server-to-client communication is proposed using the ensemble method, or by compression and Federated Dropout techniques. However, these practices offer only limited gains in communication cost.

### Summary

It is an aim of the present disclosure to provide methods, first and second nodes, and a computer program product which at least partially address one or more of the challenges mentioned above. It is a further aim of the present disclosure to provide methods, first and second nodes, and a computer program product which cooperate to facilitate reduction in the communication overhead, and thus the power consumption, in distributed machine learning techniques.

According to a first aspect of the present disclosure, there is provided a computer implemented method for using Distributed Learning to develop a Machine Learning (ML) model, the ML model comprising a plurality of component parts, and each component part comprising at least one trainable parameter. The method, performed by a first node of a computer network, comprises obtaining a reference version of the ML model, receiving, from a second node in the computer network, a representation of an updated version of the ML model, and using at least the received representation to generate a current node version of the ML model. The method further comprises, for each component part of the ML model, comparing trainable parameter values from the current node version of the ML model with corresponding trainable parameter values from the reference version of the ML model, and assigning a training status, selected from a candidate set of at least two training statuses, to the component part of the ML model according to a measure of difference between the compared trainable parameter values. The method further comprises informing the second node of the computer network of at least one of the assigned training status of the component part of the ML model, and/or the trainable parameter values from the current node version of the ML model.

According to another aspect of the present disclosure, there is provided a computer implemented method for using Distributed Learning to develop a Machine Learning (ML) model, the ML model comprising a plurality of component parts, and each component part comprising at least one trainable parameter. The method, performed by a second node of a computer network, comprises, for each component part of the ML model, receiving, from the first node, at least one of an assigned training status of the component part of the ML model, the assigned training status selected from a candidate set of at least two training statuses, and/or trainable parameter values for the component part of the ML model. The method further comprises using at least the received training statuses and trainable parameter values to generate an updated version of the ML model, and sending to the first node a representation of the updated version of the ML model.

According to another aspect of the present disclosure, there is provided a computer program product comprising a computer readable non-transitory medium, the computer readable medium having computer readable code embodied therein, the computer readable code being configured such that, on execution by a suitable computer or processor, the computer or processor is caused to perform a method according to any one of the aspects or examples of the present disclosure.

According to another aspect of the present disclosure, there is provided a first node for using Distributed Learning to develop a Machine Learning (ML) model, the ML model comprising a plurality of component parts, and each component part comprising at least one trainable parameter. The first node comprises processing circuitry configured to cause the first node to obtain a reference version of the ML model, receive, from a second node in the computer network, a representation of an updated version of the ML model, and use at least the received representation to generate a current node version of the ML model. The processing circuitry is further configured to cause the first node to, for each component part of the ML model, compare trainable parameter values from the current node version of the ML model with corresponding trainable parameter values from the reference version of the ML model, and assign a training status, selected from a candidate set of at least two training statuses, to the component part of the ML model according to a measure of difference between the compared trainable parameter values. The processing circuitry is further configured to cause the first node to inform the second node of the computer network of at least one of: the assigned training status of the component part of the ML model, and/or the trainable parameter values from the current node version of the ML model.

According to another aspect of the present disclosure, there is provided a second node for using Distributed Learning to develop a Machine Learning (ML) model, the ML model comprising a plurality of component parts, and each component part comprising at least one trainable parameter. The second node comprises processing circuitry configured to cause the second node to, for each component part of the ML model, receive, from the first node, at least one of an assigned training status of the component part of the ML model, the assigned training status selected from a candidate set of at least two training statuses, and/or trainable parameter values for the component part of the ML model. The processing circuitry is further configured to cause the second node to use at least the received training statuses and trainable parameter values to generate an updated version of the ML model, and send to the first node a representation of the updated version of the ML model.

Aspects of the present disclosure thus provide methods and nodes that enable a communication cost reduction in distributed learning between first and second nodes.

### Brief Description of the Drawings

For a better understanding of the present disclosure, and to show more clearly how it may be carried into effect, reference will now be made, by way of example, to the following drawings in which:
Figure 1 is a flow chart illustrating process steps in a computer implemented method for using Distributed Learning to develop an ML model.
Figure 2 is a flow chart illustrating process steps in another example of a computer implemented method for using Distributed Learning to develop an ML model.
Figures 3a to 3d show a flow chart illustrating process steps in another example of a computer implemented method for using Distributed Learning to develop an ML model;
Figure 4 is a flow chart illustrating process steps in another example of a computer implemented method for using Distributed Learning to develop an ML model;
Figure 5 is a block diagram illustrating functional modules in an example first node;
Figure 6 is a block diagram illustrating functional modules in another example first node;
Figure 7 is a block diagram illustrating functional modules in an example second node;
Figure 8 is a block diagram illustrating functional modules in another example second node;
Figure 9 shows an overview of a system in which example methods of the present disclosure may be implemented;
Figure 10 shows example operations at the server node of Figure 9;
Figure 11 shows example operations at a client node of Figure 9;
Figure 12 shows example operations at another example of client node of Figure 9
Figure 13 illustrates a process flow that implements an example of the method of Figures 3a to 3d; and
Figure 14 illustrates an example of signaling between a server and multiple client nodes.

### Detailed Description

Examples of the present disclosure propose methods that enable a reduction in the communication overhead from a first node to a second node in a distributed learning scenario. The first node may be a server node or may be a client node, and methods of the present disclosure thus enable communication cost reduction in both directions. The assigning of training statuses to different component parts of an ML model, these training statuses based on a comparison between training parameter values in a current node version and a reference version of the ML model, allows for flexibility in what parts of a model will be trained and exchanged between the first and second node, so ensuring that only the most important information is communicated, reducing communication cost and consequently power consumption.

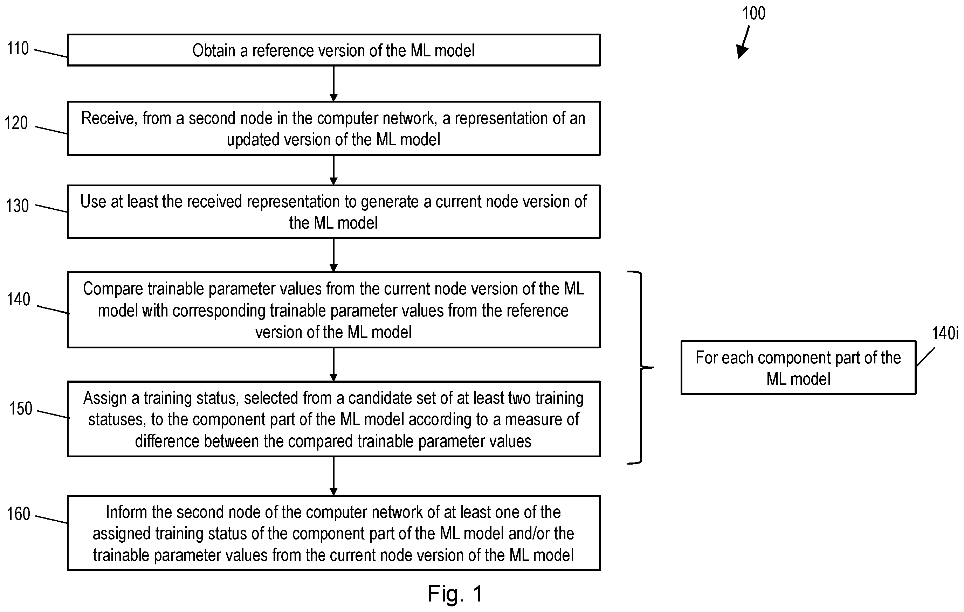

Figure 1 is a flow chart illustrating process steps in a computer implemented method 100 for using Distributed Learning to develop, or train, a Machine Learning (ML) model, the ML model comprising a plurality of component parts, and each component part comprising at least one trainable parameter. The method is performed by a first node of a computer network, which may in different examples be a server node or a client node. Whether operating as a server node or a client node, the first node may comprise a physical or virtual node, and may be implemented in a computer system, computing device or server apparatus and/or in a virtualized environment, for example in a cloud, edge cloud, an Open Radio Access Network, O-RAN, or fog deployment. Examples of a virtual node may include a piece of software or computer program, a code fragment operable to implement a computer program, a virtualised function, or any other logical entity. The first node may for example be implemented in a core network of a communication network. In other examples, the computer network may be what generally is referred to as a communication network, such as an LTE network, a New Radio (NR) network or any other existing or future communication network systems, and the first node may be implemented in a Radio Access node, which itself may comprise a physical node and/or a virtualized network function that is operable to exchange wireless signals. In some examples, a Radio Access node may comprise a base station node such as a NodeB, eNodeB, gNodeB, or any future implementation of this functionality. The first node may encompass multiple logical entities, as discussed in greater detail below, and may for example comprise a Virtualised Network Function (VNF). In other examples, the first node may be implemented in a device, which may be a wireless device, a wired device, a constrained device, etc.

Referring to Figure 1, the method 100 comprises, in step 110, obtaining a reference version of the ML model. If the first node is a server node, in one example, the reference version may for example comprise the current global version of an ML model in a Federated Learning system. In another example in which the first node is a server node, the reference version of the ML model may be specific to the particular second node with which the first node is communicating, and the first node may for example maintain multiple reference versions of the ML model, each one specific to a particular second node. If the first node is a client node, the reference version of the ML model may comprise the current node version of the ML model, which the client node maintains in a local memory.

The method 100 further comprises receiving, from a second node in the computer network, a representation of an updated version of the ML model in step 120. The representation provides information about the updated version of the ML model, and may thus be understood as an instance of the updated version of the model. The representation or instance may comprise a tensor such as a vector or matrix defining the complete model including all weights, or a tensor defining only the trainable parameters of the model. In other examples, the representation or instance may comprise a tensor indicating only how parameters change in relation to parameters in the previous training round(s), or any other form in which parameters can be rebuilt or approximated using information from a previous training round or rounds.

The method 100 then comprises using at least the received representation to generate a current node version of the ML model in step 130. As discussed in further detail below, this may comprise for example aggregating the representation with other received representation to generate an updated global model version, for example if the first node is a server node and is using a single reference model for all second nodes with which it communicates. In other examples, if the first node is a client node, step 130 may comprise replacing parameter values in the previous client node version of the model with those received from the second (server) node in the representation, followed by training the ML model using the client node's local data using a data set to generate the current node version of the ML model.

The method 100 then comprises performing steps 140 and 150 for each component part of the ML model, as illustrated at 140i. In step 140, the method 100 comprises comparing trainable parameter values from the current node version of the ML model with corresponding trainable parameter values from the reference version of the ML model. In step 150, the method 100 comprises assigning a training status, selected from a candidate set of at least two training statuses, to the component part of the ML model according to a measure of difference between the compared trainable parameter values. Finally, in step 160, the method 100 comprises informing the second node of the computer network of at least one of the assigned training status of the component part of the ML model, and/or the trainable parameter values from the current node version of the ML model.

It will be appreciated that for the purposes of the present disclosure, a component part of an ML model may comprise any portion or fragment of the model architecture, which portion or fragment comprises at least one trainable model parameter. Examples of component parts of an ML model may include individual layers, or individual nodes or group of nodes of a neural network such as LSTM, RNN, CNN, GNN, etc. Further examples of component parts of an ML model may include individual nodes or groups of nodes in a Random Forrest, or populations/genomes in a genetic algorithm.

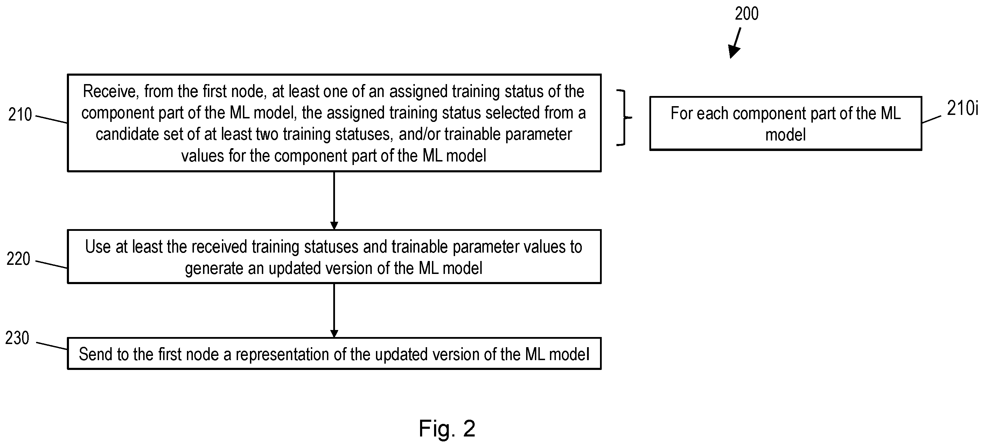

The method 100 may be complemented by a method 200 performed by a second node. Figure 2 is a flow chart illustrating process steps in another computer implemented method 200 for using Distributed Learning to develop an ML model, the ML model comprising a plurality of component parts, and each component part comprising at least one trainable parameter. The method is performed by a second node of a computer network, which may be a client node or a server node. As for the first node described above and performing the method 100, the second node may comprise a physical or virtual node, and may be implemented in any of the ways described above for the first node performing the method 100.

Referring to Figure 2, the method 200 comprises in step 210 receiving, from the first node, at least one of an assigned training status of a component part of the ML model, the assigned training status selected from a candidate set of at least two training statuses, and/or trainable parameter values for the component part of the ML model. As illustrated at 201i, the second node receives the assigned training status and/or parameter values for each component part of the ML model, as illustrated at 210i. In step 220, the method 200 comprises using at least the received training statuses and trainable parameter values to generate an updated version of the ML model. This may comprise aggregation, if the second node is a server node, or training, if the second node is a client node. The method 200 then comprises, in step 230, sending to the first node a representation of the updated version of the ML model. The representation, or instance, may take many forms, as discussed above with reference to the method 100.

It will be appreciated that in some examples, a single client or server node may execute both methods 100 and 200, thus operating as both a first and second node, assigning statuses (method 100), and acting according to statuses assigned by the other node (method 200).

A training status may comprise an indication of at least one of:
(i) whether or not values of trainable parameters of the component part should be updated by either or both of the first node or the second node;
(ii) whether or not updated trainable parameter values should be provided by either or both of the first node or the second node to the other node.

It will be appreciated that different combinations of the above features may be included in any one training status. In some examples, the candidate set of training statuses may comprise at least two of active, halt, or freeze.

In some examples, an active training status may indicate that values of trainable parameters of the component part should be updated by each of the second node and the first node, and that each of the second node and first node should provide the updated parameter values to the first node and second node respectively.

In further examples, a halt training status may indicate that values of trainable parameters of the component part should be updated by each of the second node and the first node, and that only the second node should provide the updated values to the first node.

In further examples, a freeze training status may indicate that values of trainable parameters of the component part should not be updated by either of the second or first nodes.

In further examples, the active, halt and freeze statuses may be combined with additional indications. For example, a "halt and increase" status is a halt status, and so indicates that values of trainable parameters of the component part should be updated by each of the second node and the first node, and that only the second node should provide the updated values to the first node. However, the "halt and increase" status may additionally indicate that a learning rate used by the second node should be increased. The status may indicate an increment or factor by which the learning rate should be increased, or may indicate a new learning rate for use by the second node. The learning rate is one example of a hyperparameter value for use by the first or second node in updating values of trainable parameters.

Other enhancements of the active, halt and freeze statuses, including variations to hyperparameters to be used by the second node, may be envisaged. Another example of a coined status is "halt with a new learning rate". This is similar to that discussed above, with the stipulation of a new learning rate being added to the halt status. Another example of a combined status is "collective halt", according to which parameters are sent to the first node only after a specified number of training rounds. A still further example of a combined status is, "entire network halt/active/freeze", according to which, as opposed to a layer-by-layer status assignment, one status can be assigned to the entire network. The status for the entire network may be halt, active or freeze.

The methods 100 and 200 are for developing an ML model. For the purposes of the present disclosure, the term "ML model" encompasses within its scope the following concepts:
Machine Learning algorithms, comprising processes or instructions through which data may be used in a training process to generate a model artefact for performing a given task, or for representing a real-world process or system; and
the model artefact that is created by such a training process, and which comprises the computational architecture that performs the task.

In some examples, the ML model developed according to the methods 100, 200 may comprise a Classification model, a Regression model, a Forecasting model, a Clustering model, a Control model, and/or other types of ML model. Example uses of Classification models may include classifying different types of faults based on Hardware or Software log files of a communication network base station, classifying violation or conformance to a service level agreement based on observed statistics from the infrastructure, etc. Example uses of Regression models may include estimating energy consumption of a radio unit. Example uses of Forecasting models may include prediction of KPIs using PM/CM (Performance Management/Configuration Management) data and LSTM models, Handover prediction using graph neural networks, etc. Example uses of Clustering include Unsupervised Federated Learning to detect anomalies. Example uses of Control models include Predictive maintenance. It will be appreciated that a range of specific model architectures are commercialised for the above example tasks, and that this list is not exhaustive, but merely illustrative of the different types of ML models, and associated tasks, that may eb developed according to the methods disclosed herein.

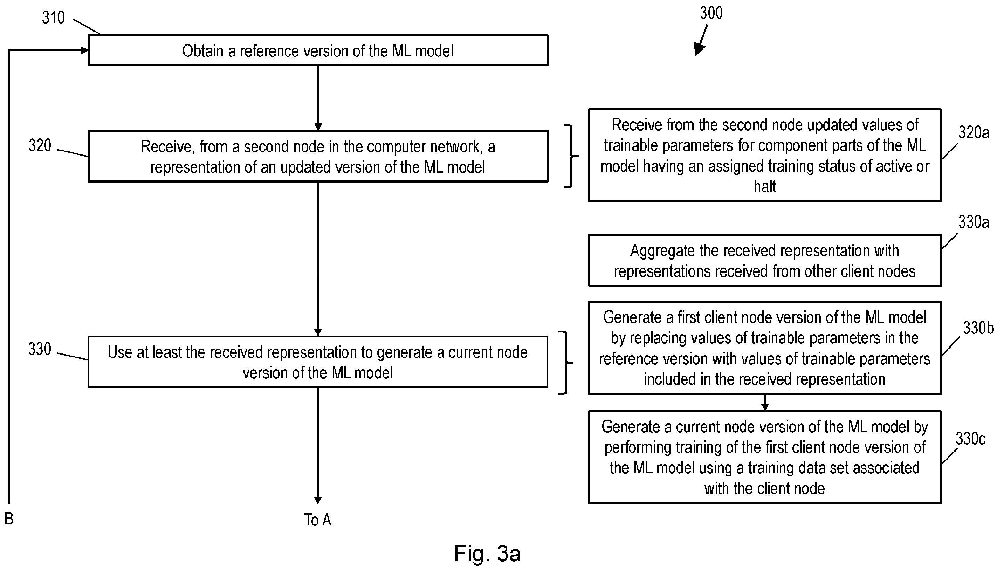

Figures 3a to 3d show flow charts illustrating another example of a computer implemented method for using Distributed Learning to develop an ML model, the ML model comprising a plurality of component parts, and each component part comprising at least one trainable parameter. As for the method 100 discussed above, the method 300 is performed by a first node in a computer network, which may comprise a physical or virtual node. The first node may be acting as a server node or a client node, as discussed in further detail below. The method 300 illustrates examples of how the steps of the method 100 may be implemented and supplemented to provide the above discussed and additional functionality.

Referring initially to Figure 3a, in a first step 310, the first node obtains a reference version of the ML model. If the first node is a server node, the reference version of the ML model may in one example comprise a current global version of the ML model that is maintained by the server node. In another example, the reference version of the ML model may comprise a version that is specific to a particular second node. Thus for example a server node may maintain reference versions of the ML model that are specific to each second node with which it is communicating. In a still further example, the server node may construct the reference version from a global version maintained at the server node, and model parameter values received from the client node in step 320. The server node may receive from the client node a representation comprising a plurality of ML model parameter values. The server node may then construct the reference version of the model by completing any parameter values missing from the received representation with values taken from the global version maintained by the server node. If, alternatively, the first node is a client node, then the reference version may for example comprise the current client node version of the ML model, trained in the preceding learning round using the client's local data set.

In step 320, the first node receives, from a second node in the computer network, a representation of an updated version of the ML model. The representation, or instance, may take many forms, as discussed above with reference to the method 100. As illustrated at 320a, this may comprise receiving from the second node updated values of trainable parameters for component parts of the ML model having an assigned training status of active or halt. As discussed above, these training statuses include instructions to provide updated trainable parameter values to the first node. Such statuses may include combined or intermediate training statuses in which the actions associated with active or halt, as discussed above, are combined with a change to a hyperparameter. Generally, an ML model, or a representation of an ML model, can be transmitted or transferred between nodes using any existing model format such as Open Neural Network Exchange, ONNX (https://onnx.ai), or formats used in commonly used toolboxes such as Keras or PyTorch. In step 330, the first node uses at least the received representation to generate a current node version of the ML model. The actions involved in completing step 330 may vary according to whether the first node is a server node or a client node. If the first node is a server node and the second node is a client node as illustrated at 330a, using at least the received representation to generate a current node version of the ML model may comprise aggregating the received representation with representations received from other client nodes. This aggregation may be performed by taking a mean value, weighted mean value, any non-linear transformations of weights, etc. In such examples, the current node version of the ML model may comprise the updated global version of the model. In some examples, for component parts of the ML model having a freeze training status, using at least the received representation to generate a current node version of the ML model may comprise copying the values from the reference version of the ML model into the current node version (as in some examples, values for freeze layers are not included in the representation from the second node).

If, alternatively, the first node is a client node and the second node is a server node, using at least the received representation to generate a current node version of the ML model in step 330 may comprise initially generating a first client node version of the ML model at step 330b by replacing values of trainable parameters in the reference version of the ML model with values of trainable parameters included in the received representation. Completing step 330 may then comprise generating the current client node version of the ML model by performing training of the first client node version of the ML model using a training data set associated with the client node in step 330c.

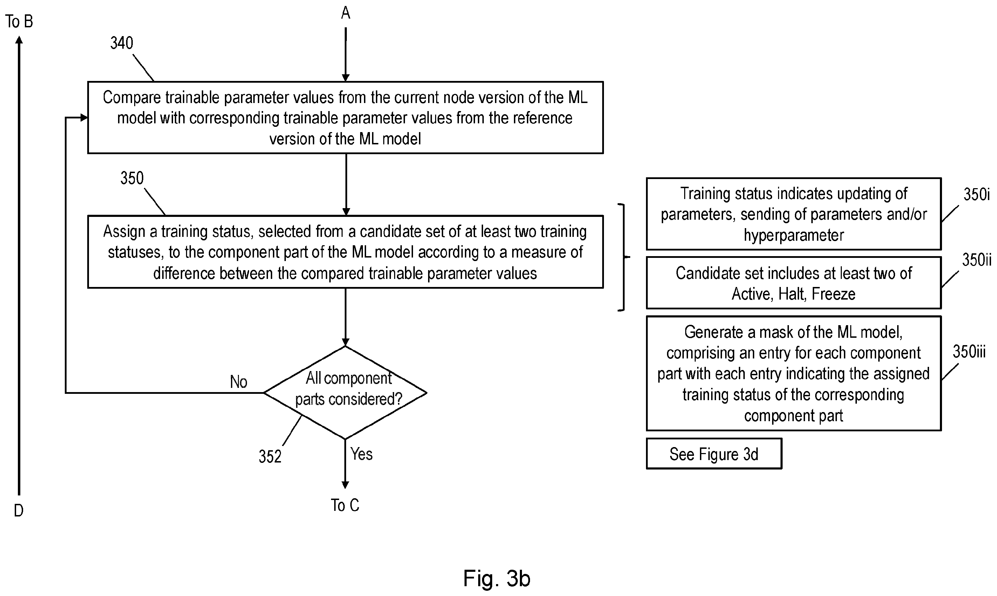

Referring now to Figure 3b, the first node then performs steps 340 and 350 for individual component parts of the ML model. In step 340, the first node compares trainable parameter values from the current node version of the ML model with corresponding trainable parameter values from the reference version of the ML model, the reference version being as discussed above with reference to step 310. In step 350, the first node then assigns a training status, selected from a candidate set of at least two training statuses, to the component part of the ML model according to a measure of difference between the compared trainable parameter values. As discussed above, and as illustrated at 350i, the training status comprises an indication of at least one of:
(i) whether or not values of trainable parameters of the component part should be updated by either or both of the first node or the second node;
(ii) whether or not updated trainable parameter values should be provided by either or both of the first node or the second node to the other node.

As illustrated at 350ii, the candidate set of training statuses may comprise at least two of active, halt, or freeze. Active, halt and freeze training statues may comprise the following indications:
An active training status indicates that values of trainable parameters of the component part should be updated by each of the second node and the first node, and that each of the second node and first node should provide the updated parameter values to the first node and second node respectively.

A halt training status indicates that values of trainable parameters of the component part should be updated by each of the second node and the first node, and that only the second node should provide the updated values to the first node.

A freeze training status indicates that values of trainable parameters of the component part should not be updated by either of the second or first nodes. As discussed above, any of the active, halt, and freeze statuses may be combined with additional indications, for example adjusting hyperparameter values to be used by the second node.

As illustrated at 350iii, in some examples, assigning a training status to the component part of the ML model according to a measure of difference between the compared trainable parameter values may comprise generating a mask of the ML model, the mask comprising an entry for each component part of the ML model, each entry indicating the assigned training status of the corresponding component part.

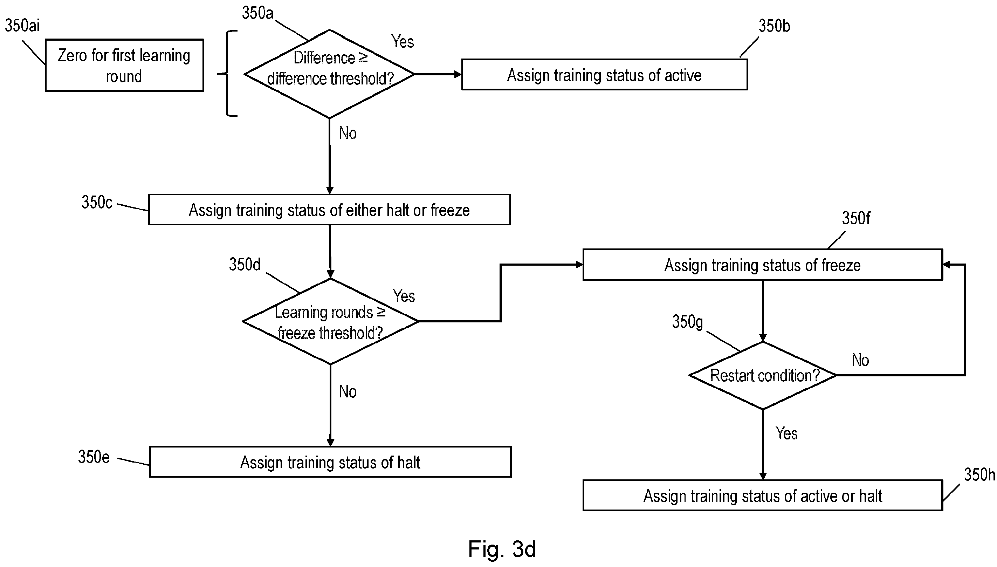

Steps that may be performed in order to carry out the assigning of a training status at step 350 are illustrated in Figure 3d.

Referring now to Figure 3d, the first node may initially check whether a measure of difference between the compared trainable parameter values is at or above a difference threshold in step 350a. If the measure of difference between the compared trainable parameter values is at or above the difference threshold, the first node may assign to the component part a status of active in step 350b. If the measure of difference between the compared trainable parameter values is below a difference threshold, the first node may assign to the component part a training status of either halt or freeze in step 350c. The measure of difference could be L2 distance, cosine similarity, a computed an index of dispersion, or any other suitable difference measure.

As illustrated at 350ai, in a first learning round, the difference threshold may be set to zero. This may ensure that in the first learning round, all component parts of the ML model are assigned a training status of active. The difference threshold may be increased in later learning rounds in subsequent method steps, as discussed below.

Having determined at step 350c that the component part should be assigned a training status of either halt or freeze, (as the measure of difference is below the difference threshold) the first node may then check whether a number of learning rounds for which the component part has had an assigned training status of halt is at or above a freeze threshold in step 350d. If a number of learning rounds for which the component part has had an assigned training status of halt is below a freeze threshold, the first node may assign to the component part a training status of halt in step 350e.

If the number of learning rounds for which the component part has had an assigned training status of halt is at or above a freeze threshold, the first node may assign to the component part a training status of freeze in step 350f. For component parts of the ML model that have been assigned a training status of freeze in step 350f, the first node may then check for fulfilment of a restart condition in step 350g. If the restart condition is not fulfilled, then the first node may maintain the assigned training status of freeze. If the restart condition is fulfilled, then the first node may assign the component part of the ML model a training status of active or halt in step 350h. Examples of the restart condition may include a threshold number of federation rounds for which the component part had been frozen, as well as combined conditions, relating to availability of communication bandwidth and power, convergence of other component parts of the ML model, etc. The restart condition may act to ensure that second nodes do not remain in local minima, and that when suitable resources are available, training possibilities are fully exploited.

When assigning any of the status of active, freeze or halt in steps 350b, 350e and 350f, the first node may additionally determine whether it is appropriate to adjust a hyperparameter used by the second node. Thus for example when assigning a status of halt, the first node may determine whether on the basis of available resources or other constraints, it would be advantageous to increase learning rate, or to change any other hyperparameter used by the second node.

Referring again to Figure 3b, having assigned a training status for a component part of the ML model at step 350, the first node then checks at step 352 whether or not all component parts of the model have had a training status assigned. If all component parts have not yet been assigned a training status, the first node returns to step 340 to compare and assign a training status for the next component part of the model.

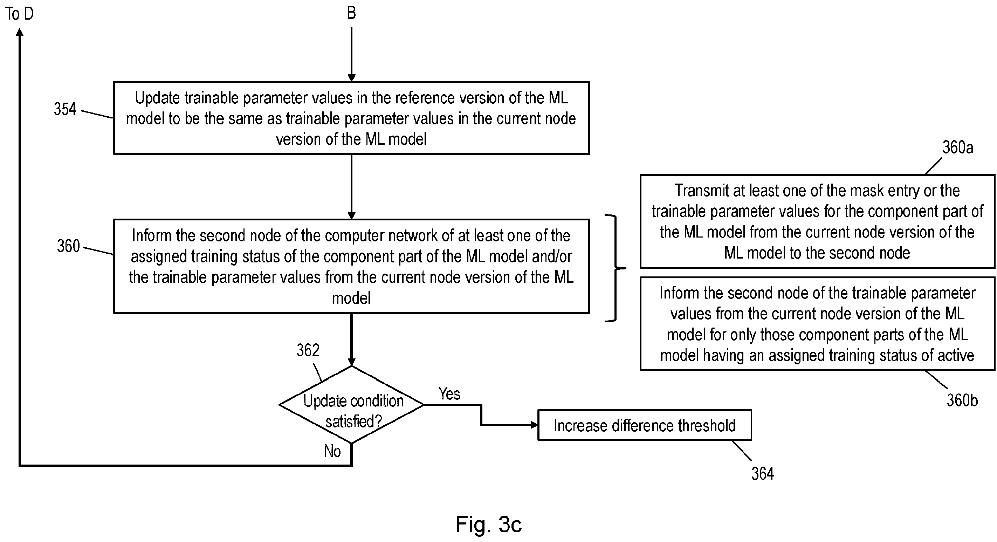

When all component parts of the model have been assigned a training status, and referring now to Figure 3c, the first node may then, in step 354, update trainable parameter values in the reference version of the ML model to be the same as trainable parameter values in the current node version of the ML model. It will be appreciated that completion of this step may depend on the nature of the reference model, and in some examples, if the first node is a server node and the server node constructs reference versions that are specific to each client node, then the server node may instead update the global version of the model to include trainable parameter values from the current node version of the model.

In step 360, the first node informs the second node of the computer network of at least one of the assigned training status of each component part of the ML model and/or the trainable parameter values from the current node version of the ML model. As illustrated at 360a, this may comprise transmitting at least one of the mask entry or the trainable parameter values for each component part of the ML model from the current node version of the ML model to the second node.

As illustrated at 360b, informing the second node may comprise informing the second node of the trainable parameter values from the current node version of the ML model for only those component parts of the ML model having an assigned training status of active. For component parts having a training status of halt or freeze, the first node may transmit only the mask entry. It will be appreciated that the mask entry may be represented by a very limited number of bits, depending on the number of possible status variations, and consequently, the overall amount of information to be transmitted is greatly reduced, when compared with transmitting training parameter values for all component parts of the ML model.

In step 362, the first node may check for satisfaction of an update condition, and, on fulfilment of the update condition, the first node may increase the difference threshold. In some examples, the update condition may comprise at least one of:
completion of a threshold number of learning rounds;
available bandwidth for communication with the second node falling below a communication threshold;
available computing resource for execution of the method falls below a compute threshold;
available memory falling below a memory threshold;
power consumption at the first or second nodes exceeding a power threshold;
an external intervention.

The effect of the update condition may be that there is an increase in the difference threshold (meaning more component parts of the ML model will enter halt or freeze mode and so there will be less updating and exchange of parameter values), whenever there is a need to reduce energy consumption, processing, or communication resource usage. It will be appreciated that an external intervention can be a manual intervention from an expert or administrator, or any other external factor.

If the update condition is not fulfilled, then the first node returns to step 310, to complete another iteration of the method, over another learning round.

It will be appreciated that examples of the present disclosure thus provide a method that both reduces communication cost in a distributed learning scenario, and also offers considerable flexibility in its application. The different statuses, offer considerable variation and granular control as to which entities update and exchange trainable parameter values, while reducing communication cost by only transmitting trainable parameter values for component parts for which this is appropriate, and for other component parts, transmitting a training status that can be represented extremely efficiently, with a small number of bits.

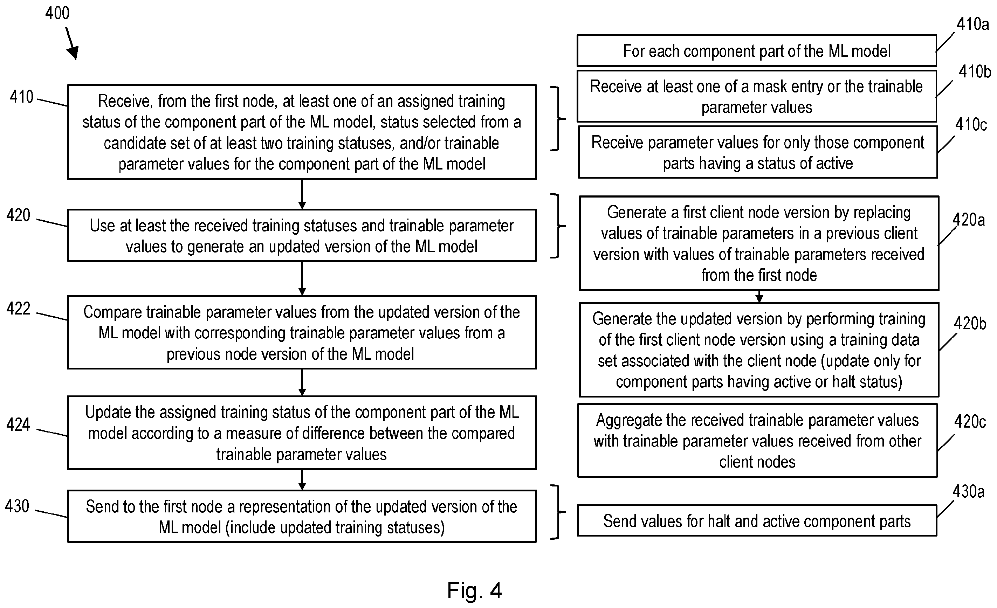

Figure 4 is a flow chart illustrating another example of a computer implemented method 400 for using Distributed Learning to develop an ML model, the ML model comprising a plurality of component parts, and each component part comprising at least one trainable parameter. As for the method 200 discussed above, the method 400 is performed by a second node in a computer network, which may comprise a physical or virtual node. The second node may be acting as a client node or a server node, as discussed in further detail below. The method 400 illustrates examples of how the steps of the method 200 may be implemented and supplemented to provide the above discussed and additional functionality.

Referring to Figure 4, the second node performs step 410 for each component part of the ML model, as illustrated at 410a. In step 410, the second node receives, from the first node, at least one of an assigned training status of the component part of the ML model, the assigned training status selected from a candidate set of at least two training statuses, and/or trainable parameter values for the component part of the ML model.

Features and examples of training statuses are discussed above with reference to method 300, and this discussion applies equally to the method 400.

As illustrated at 410b, performing step 410 may comprise receiving at least one of a mask entry or the trainable parameter values for the component part of the ML model, the mask entry indicating the assigned training status of the component part of the ML model. As illustrated at 410c, performing step 410 may additionally or alternatively comprise receiving from the first node trainable parameter values for only those component parts of the ML model having an assigned training status of active.

In step 420, the second node uses at least the received training statuses and trainable parameter values to generate an updated version of the ML model. Step 420 may be performed differently according to whether the second node is a client node or a server node. In one example, if the second node comprises a client node and the first node comprises a server node, performing step 420 may initially comprise generating a first client node version of the ML model in step 420a by replacing values of trainable parameters in a previous client version of the ML model with values of trainable parameters received from the first node. Performing step 420 may then comprise generating the updated version of the ML model by performing training of the first client node version of the ML model using a training data set associated with the client node in step 420b. In such examples, generating the updated version of the ML model by performing training of the first client node version of the ML model using a training data set associated with the client node may comprise, during training, updating values of trainable parameters only for component parts of the ML model having a training status of active or halt. Thus, while only active component part parameter values may be received from the first node (in this example the server node), parameters for both active and halt component parts may be trained at the second node (in this example the client node).

In another example, if the second node comprises a server node and the first node comprises a client node, using at least the received training statuses and trainable parameter values to generate an updated version of the ML model in step 420 may comprise aggregating the received trainable parameter values with trainable parameter values received from other client nodes in step 420c.

In some examples of the present disclosure, the comparison of training parameter values, and assigning of training statuses, may take place at both the first node and the second node. In such examples, the second node may perform steps 422 and 424 of the method 400 for each component part of the ML model.

In step 422, the second node compares trainable parameter values from the updated version of the ML model with corresponding trainable parameter values from a previous node version of the ML model, and in step 424, the second node updates the assigned training status of the component part of the ML model according to a measure of difference between the compared trainable parameter values. It will be appreciated that all of the detail and options discussed above with respect to comparison and assignment of training statuses etc. by the first node as part of the method 300 is equally applicable to the performance by the second node of steps 422 and 424 of the method 400.

In step 430, the second node sends to the first node a representation of the updated version of the ML model. The representation, or instance, may take many forms, as discussed above with reference to the method 100. In examples in which the second node has performed steps 422 and 424, the second node may also send the updated training statuses to the first node with the representation of the updated version of the ML mode. As illustrated at 430a, sending to the first node a representation of the updated version of the ML model may comprise sending to the first node trainable parameter values from the updated version of the ML model for only those component parts of the ML model having an assigned training status of active or halt.

As discussed above, the methods 100 and 300 may be performed by a first node, and the present disclosure provides a first node that is adapted to perform any or all of the steps of the above discussed methods. The first node may comprise a physical node such as a computing device, server etc., or may comprise a virtual node. A virtual node may comprise any logical entity, such as a Virtualized Network Function (VNF) which may itself be running in a cloud, edge cloud, O-RAN or fog deployment. The first node may be operable to be instantiated in a cloud based deployment, and/or may be a device. In one example, the first node may be instantiated in a physical or virtual server in a centralised or cloud based deployment.

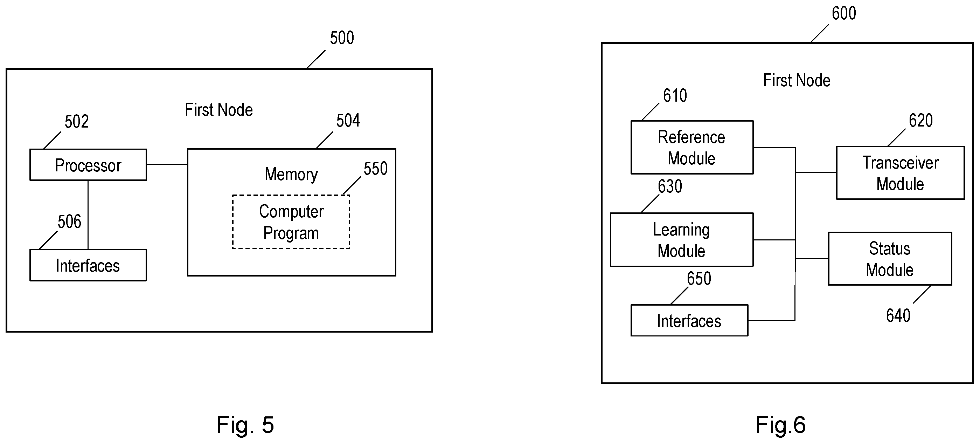

Figure 5 is a block diagram illustrating an example first node 500 which may implement the method 100 and/or 300, as illustrated in Figures 1 and 3a to 3d, according to examples of the present disclosure, for example on receipt of suitable instructions from a computer program 550. Referring to Figure 5 the first node 500 comprises a processor or processing circuitry 502, and may comprise a memory 504 and interfaces 506. The processing circuitry 502 is operable to perform some or all of the steps of the method 100 and/or 300 as discussed above with reference to Figures 1 and 3a to 3d. The memory 504 may contain instructions executable by the processing circuitry 502 such that the first node 500 is operable to perform some or all of the steps of the method 100 and/or 300, as illustrated in Figures 1 and 3a to 3d. The instructions may also include instructions for executing one or more telecommunications and/or data communications protocols. The instructions may be stored in the form of the computer program 550. The memory may also contain for example ML model parameters. In some examples, the processor or processing circuitry 502 may include one or more microprocessors or microcontrollers, as well as other digital hardware, which may include digital signal processors (DSPs), special-purpose digital logic, etc. The processor or processing circuitry 502 may be implemented by any type of integrated circuit, such as an Application Specific Integrated Circuit (ASIC), Field Programmable Gate Array (FPGA) etc. The memory 504 may include one or several types of memory suitable for the processor, such as read-only memory (ROM), random-access memory, cache memory, flash memory devices, optical storage devices, solid state disk, hard disk drive, etc. The first node 500 may further comprise interfaces which may be operable to facilitate communication with a second node, and/or with other nodes or modules, over suitable communication channels.

Figure 6 illustrates functional modules in another example of first node 600 which may execute examples of the methods 100 and/or 300 of the present disclosure, for example according to computer readable instructions received from a computer program. It will be understood that the modules illustrated in Figure 6 are functional modules, and may be realized in any appropriate combination of hardware and/or software. The modules may comprise one or more processors and may be integrated to any degree.

Referring to Figure 6, the first node 600 is for using Distributed Learning to develop a Machine Learning (ML) model, the ML model comprising a plurality of component parts, and each component part comprising at least one trainable parameter. The first node 600 comprises a reference module 610 for obtaining a reference version of the ML model. The first node 600 further comprises a transceiver module 620 for receiving, from a second node in the computer network, a representation of an updated version of the ML model. The first node 600 further comprises a learning module 630 for using at least the received representation to generate a current node version of the ML model. The first node 600 further comprises a status module 640. The status module is for, for each component part of the ML model, comparing trainable parameter values from the current node version of the ML model with corresponding trainable parameter values from the reference version of the ML model, and assigning a training status, selected from a candidate set of at least two training statuses, to the component part of the ML model according to a measure of difference between the compared trainable parameter values. The transceiver module 620 is also for informing the second node of the computer network of at least one of the assigned training status of the component part of the ML model, and/or the trainable parameter values from the current node version of the ML model. The second node 600 may further comprise interfaces 650, which may be operable to facilitate communication with a second node, and/or with other nodes or modules, over suitable communication channels.

As discussed above, the methods 200 and 400 may be performed by a second node, and the present disclosure provides a second node that is adapted to perform any or all of the steps of the above discussed methods. The second node may comprise a physical node such as a computing device, server etc., or may comprise a virtual node. A virtual node may comprise any logical entity, such as a Virtualized Network Function (VNF) which may itself be running in a cloud, edge cloud, O-RAN or fog deployment. The second node may be operable to be instantiated in a cloud based deployment, and or may be a device. In one example, the second node may be instantiated in a physical or virtual server in a centralised or cloud based deployment.

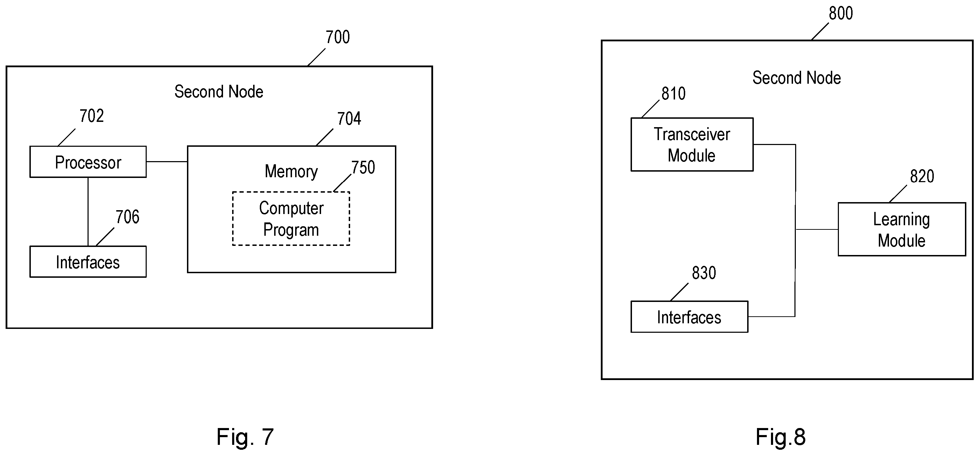

Figure 7 is a block diagram illustrating an example second node 700 which may implement the method 200 and/or 400, as illustrated in Figures 2 and 4, according to examples of the present disclosure, for example on receipt of suitable instructions from a computer program 750. Referring to Figure 7, the second node 700 comprises a processor or processing circuitry 702, and may comprise a memory 704 and interfaces 706. The processing circuitry 702 is operable to perform some or all of the steps of the method 200 and/or 400 as discussed above with reference to Figures 2 and 4. The memory 704 may contain instructions executable by the processing circuitry 702 such that the second node 700 is operable to perform some or all of the steps of the method 200 and/or 400, as illustrated in Figures 2 and 4. The instructions may also include instructions for executing one or more telecommunications and/or data communications protocols. The instructions may be stored in the form of the computer program 750. In some examples, the processor or processing circuitry 702 may include one or more microprocessors or microcontrollers, as well as other digital hardware, which may include digital signal processors (DSPs), special-purpose digital logic, etc. The processor or processing circuitry 702 may be implemented by any type of integrated circuit, such as an Application Specific Integrated Circuit (ASIC), Field Programmable Gate Array (FPGA) etc. The memory 704 may include one or several types of memory suitable for the processor, such as read-only memory (ROM), random-access memory, cache memory, flash memory devices, optical storage devices, solid state disk, hard disk drive, etc. The second node 700 may further comprise interfaces which may be operable to facilitate communication with a first node, and/or with other nodes or modules, over suitable communication channels.

Figure 8 illustrates functional modules in another example of second node 800 which may execute examples of the methods 200 and/or 400 of the present disclosure, for example according to computer readable instructions received from a computer program. It will be understood that the modules illustrated in Figure 8 are functional modules, and may be realized in any appropriate combination of hardware and/or software. The modules may comprise one or more processors and may be integrated to any degree.

Referring to Figure 8, the second node 800 is for using Distributed Learning to develop a Machine Learning (ML) model, the ML model comprising a plurality of component parts, and each component part comprising at least one trainable parameter. The second node 800 comprises a transceiver module 810 for, for each component part of the ML model, receiving, from the first node, at least one of an assigned training status of the component part of the ML model, the assigned training status selected from a candidate set of at least two training statuses, and/or trainable parameter values for the component part of the ML model. The second node 800 further comprises a learning module 820 for using at least the received training statuses and trainable parameter values to generate an updated version of the ML model. The transceiver module 810 is also for sending to the first node a representation of the updated version of the ML model. The second node 800 may further comprise interfaces 830, which may be operable to facilitate communication with a first node, and/or with other nodes or modules, over suitable communication channels.

Figures 1 to 4 discussed above provide an overview of methods which may be performed according to different examples of the present disclosure. These methods may be performed by first and second nodes respectively, as illustrated in Figures 5 to 8. The methods enable a reduction in communication overhead between nodes during distributed learning. In particular, the methods may enable a reduction in communication overhead from a server node to a client node during distributed learning. There now follows a detailed discussion of how different process steps illustrated in Figures 1 to 4 and discussed above may be implemented. The functionality and implementation detail described below is discussed with reference to the modules of Figures 5 to 8 performing examples of the methods 100, 200, 300 and/or 400, substantially as described above.

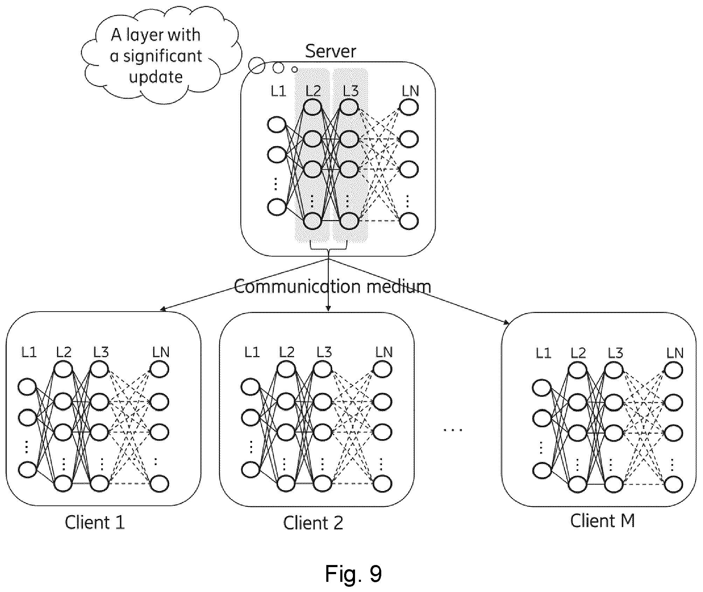

Figure 9 shows an overview of a system in which example methods of the present disclosure may be implemented. The system comprises a server node communicating with a number M of client nodes. In one example, the server node may operate as a first node and perform examples of the methods 100, 300, and the client nodes may operate as second nodes and perform examples of the methods 200, 400. In further examples, the roles may be reversed, with the server node operating as a second node and the client nodes operating as first nodes. It will be appreciated that in some examples of the method 400, the second node or nodes may also perform comparison of trainable parameter values and assigning of training statuses to component parts of the ML model being trained. In such examples, training statuses may be assigned at both the server node and the client nodes.

In an example implementation illustrated in Figure 9, the server node is operating as a first node, and the client nodes are operating as second nodes. The server node assigns training statuses to component parts of the ML model, in this case to layers of the Neural Network being trained, and the server node only sends the parameters of active layers to the clients. In this implementation, the latest trained model is stored in the server node, and after model aggregation, parameters with a significant similarity to those of the reference model (i.e., below a difference threshold) are excluded from transmitting to clients. In the illustrated implementation, a mask is created by tagging the layers as Active, Halt, or Freeze. This mask is sent together with the parameters of the Active layers to the candidate clients.

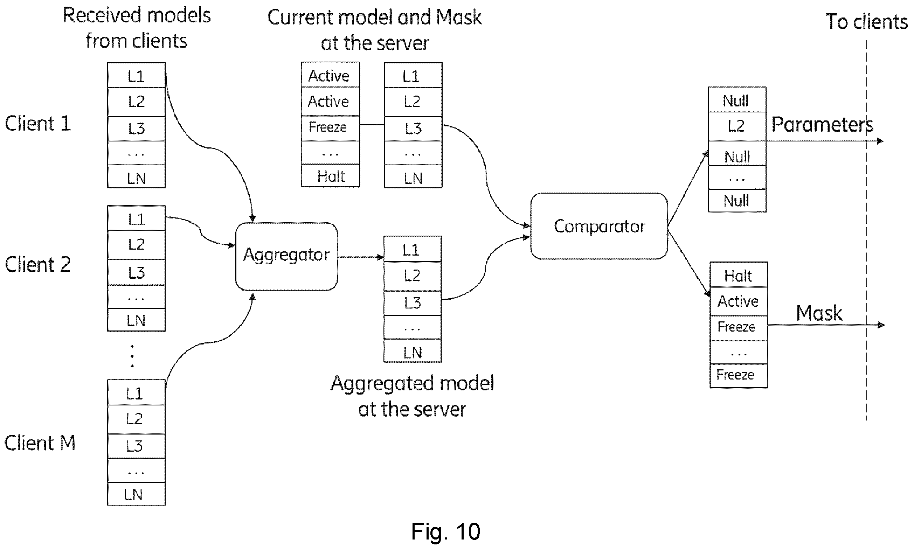

Figure 10 shows example operations at the server node of Figure 9, which is operating as a first node, performing examples of methods 100 and/or 300. The server node comprises two logical components specifically related to method implementation: an aggregator and a comparator. In the illustrated example, the ML model being trained is a Neural Network, and the comparator is a layer-by-layer comparator. Comparators for other types of component part, and for other types of ML model may be envisaged according to the nature of the ML model being trained. Referring to Figure 10, aggregation takes place after receiving all model updates from candidate client nodes. In some examples, not all client nodes may be considered by the server node as candidate clients to participate in aggregation and parameter sharing. The aggregated model is then compared with a reference model, which in the present example is the current model at the server. The comparator assigns one of three training statuses (also referred to as modes) to each layer: Active, Halt or Freeze. The parameters of the Halt and Freeze layers are masked and not sent to the client nodes. The comparator works in that way that if the similarity score of a layer is smaller than a threshold (i.e., if a difference score is at or above a threshold), the layer is tagged as Active, meaning that it should undergo further training in the clients using the updated parameter values provided by the server. If the similarity score of a layer is greater than a threshold (i.e., if a difference score below a threshold) and the previous mask of the layer is Active, the layer goes to the Halt mode, meaning that no significant changes has been identified in the trained models of the clients. There is consequently limited benefit to be achieved in sending the updated parameters back to the clients, although the client node may continue to update the parameter values during their training. If the similarity score is detected greater than a threshold (i.e., if a difference score is below a threshold) while in the reference model the previous status of the layer is Halt, then the layer may go to the Freeze mode, meaning that the parameters of the layer remain unchanged in the training phase at the client nodes. This status takes advantage of the fact that further training is not likely to change the parameters of the layer any further. In some examples, the method may ensure that a component part (such as a NN layer) may be maintained in the Halt status for a given number of learning rounds before transitioning to Freeze.

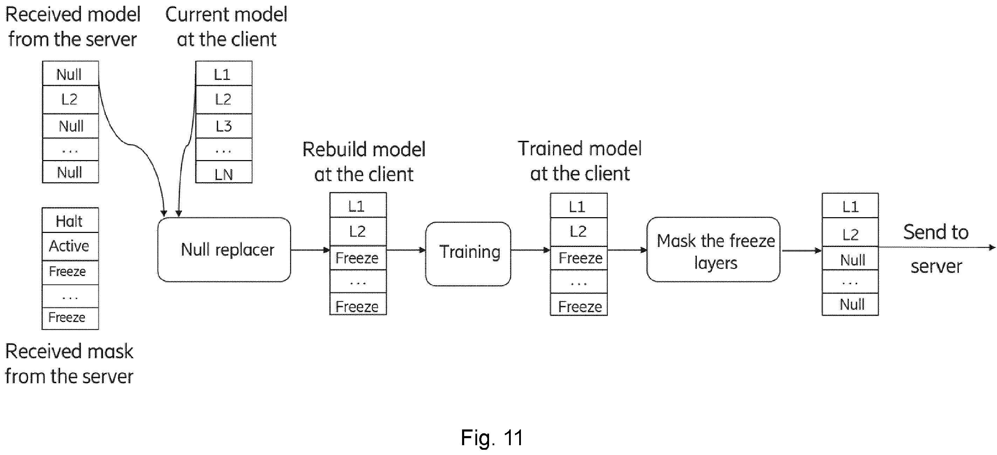

Figure 11 shows example operations at a client node of Figure 9, which is operating as a second node, performing examples of methods 200 and/or 400. The client node comprises three logical components specifically related to method implementation: a Null replacer, a trainer, and a Mask placer. In the illustrated example, the ML model being trained is a Neural Network, and the trainer is consequently a NN trainer. After receiving the server node model, the client node replaces the null layers (having either Halt or Freeze status) with the corresponding layers in the current client model. The new model is then sent to the NN trainer component to train the model. In the training phase, the frozen layers will remain unchanged, but parameters of Active and Halt layers are free to evolve. Finally, in the trained model, the frozen layers are set to Null before transmitting parameter values for the Halt and Active layers to the server node.

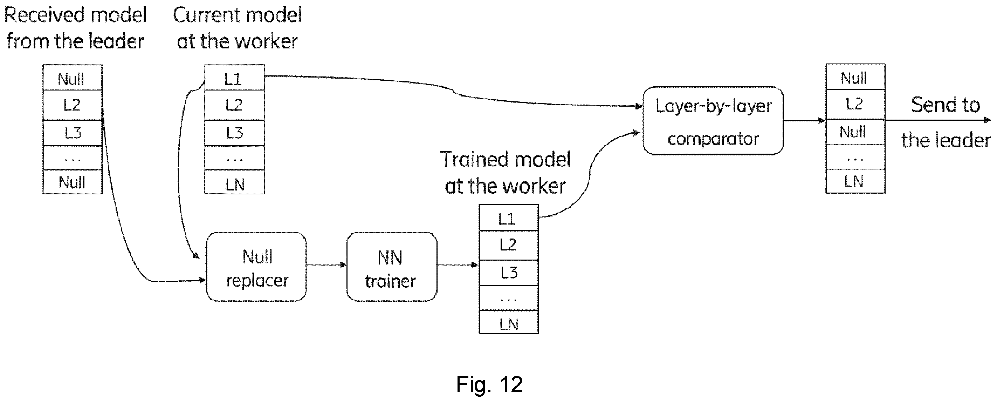

Figure 12 shows example operations at another example of client node of Figure 9. The client node of Figure 12 is operating as a second node and is performing examples method 400 in which the second node also performs comparison of trainable parameter values and assigns training statuses. In the client node of Figure 12, the mask placer is enhanced to also perform the function of the layer-by-layer comparator discussed above. Referring to Figure 12, after receiving the server node model, the client node replaces the null layers (having either Halt or Freeze status) with the corresponding layers in the current client model. The new model is then sent to the NN trainer component to train the model. In the training phase, the frozen layers will remain unchanged, but parameters of Active and Halt layers are free to evolve. Following training, the trained model is compared with the current client model (which in the present case acts as the reference model). For the Neural Network of the present example, this comparison is layer-by-layer, as discussed above. As a consequence of the comparison, and according to a similarity or difference score calculated for corresponding values of trainable parameters in the trained and reference version of the model, the client node assigns a training status to each layer, as discussed in full above with reference to actions at the server node and Figure 10.

In some examples, the models at different clients could be slightly different from the shared global model, allowing a level of specialization in each client based on its local data.

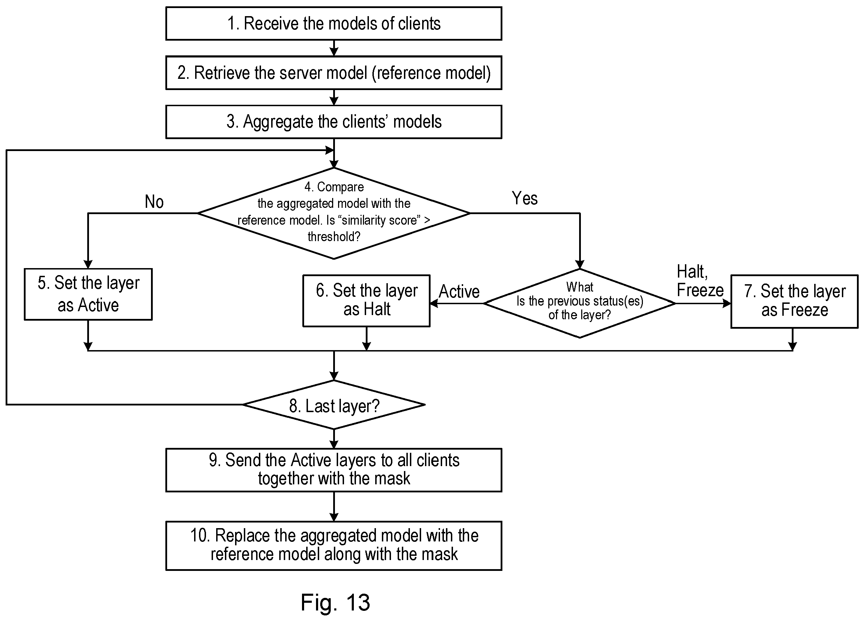

Figure 13 illustrates a process flow that implements an example of the method 300, when performed by a first node that comprises a server node.

Referring to Figure 13, the server node may perform the following steps:
1- Receive the model from all candidate clients (step 320 of method 300)
2- Retrieve the current server node model as the reference model (step 310 of method 300)
3- Perform aggregation (step 330, 330a of method 300)
4- Compare the aggregated model with the reference model, layer by layer (step 340, 350a of method 300)
5- If the similarity score for a layer is smaller than a threshold value, set the layer as Active in the mask (step 350a, 350b of method 300)
6- If the similarity score is greater than a threshold value while the previous status of the layer in the reference model is Active, then set the layer as Halt in the mask (step 350a, 350d, 350e of method 300)
7- If the similarity score is greater than a threshold value while the previous status(es) of the layer in the reference model is Halt or Freeze, then set the layer as Freeze in the mask (step 350a, 350d, 350f of method 300)
8- If all layers are compared, go to Step 9 (step 352 of method 300), otherwise go back to Step 4 (step 340, 350a of method 300)
9- Send the parameters of the Active layers to all candidate clients along with the mask. The parameters of the Halt and Frozen layers are not transmitted (step 360, 360a, 360b of method 300)
10- Replace the aggregated model with the reference model and store it along with the mask (step 354 of method 300)

A corresponding process flow may be envisaged to implement an example of the method 400, when performed by a second node that comprises a client node. Such a process flow may include the following steps:
1- Receive the model and mask entries from the server node (step 410, 410a, 410b. 410c of method 400))
2- Retrieve the current client node model as the reference model
3- In the received model from the server node, replace the Null layers with their corresponding layer in the reference model (step 420, 420a of method 400)
4- Perform NN training (step 420b of method 400)
5- Compare the trained model with the reference model, layer by layer (step 422 of method 400). If the similarity score of a layer is smaller than a threshold value, set the layer as Null, otherwise, keep the parameters of the layer and select the layer (step 424 of method 400, see also steps 350a to 350h of method 300)
6- Send the parameters of selected layers to the server node (step 430 of method 400)
7- Replace the trained model with the reference model.

It will be appreciated from considering the above two example process flows that method steps of the method 100, 200, 300, 400 may be performer in a different order to that set out in the figures. Thus, for example a first node may receive representations of updated versions of an ML model from second nodes before obtaining a reference version of the ML model, for example by retrieving the reference version from a memory. Other examples in which method steps may be performed in a different order to that presented above may be envisaged.

With reference to the comparison of trainable parameter values from different versions of an ML model, it will be appreciated that a range of different algorithms may be used to calculate the similarity, or difference, between the values for component parts of the ML model, for example between layers an aggregated and reference version of a Neural Network model. Example difference metrics could include be L2 distance, cosine similarity, or computing an index of dispersion, which is a summary of statistics computed from the ratio of variance to the mean.

As discussed above, in a first learning round (for example in a first federation round in the case of federated learning), the difference threshold may be set to zero so that the parameter values of all component parts (for example all layers of a Neural Network) are transmitted. In this case all layers are assigned an Active training status. As the server model converges, the difference threshold may be increased gradually to achieve the communication cost savings discussed above. For example, if a server node acting as a first node were to halt or freeze half of the parameters of a model for half of the training time, then a 25% reduction in communication cost from the server to the clients would be achieved.

In order to avoid falling permanently into local optima, the first node could decide to unfreeze layers in some learning (or federation) rounds. The learning rounds continue until an end condition is met, for example until a certain learning round is reached or when loss values descend below a pre-defined value.

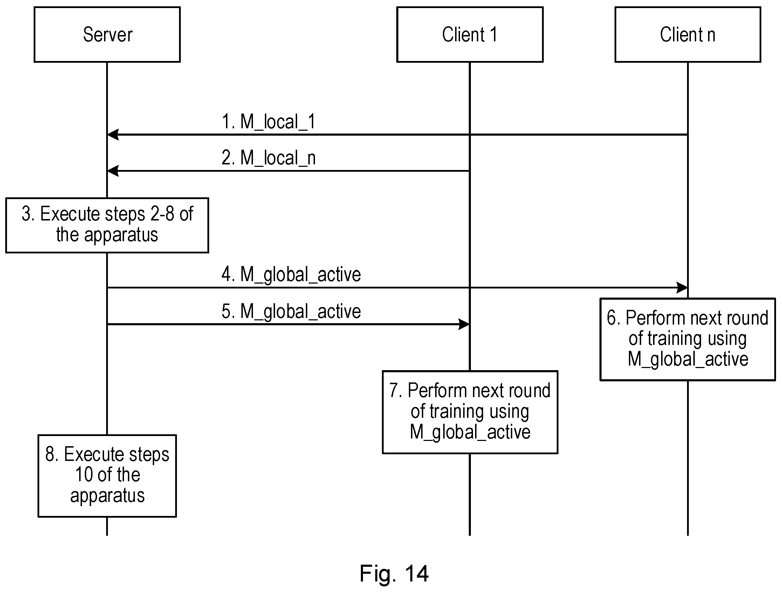

An example of signaling between a server and multiple clients is illustrated in Figure 14. Figure 14 continues the example of a server node acting as a first node and implementing examples of the methods 100, 300, and client nodes acting as second nodes and implementing examples of the methods 200, 400. Referring to Figure 14, in steps (1) and (2) the server receives locally trained models M_local_1 and M_local_2. In step (3) the server executes steps 2 - 8 described above with reference to Figure 13. In steps (4) and (5) the server communicates a reduced model to the clients, M_global_active, containing only the active layers as selected. The client nodes then perform the next round of training using the received active layers of the global model.

Examples of the present disclosure thus provide methods and nodes that enable a reduction in the communication cost of distributed learning. This reduction is achieved through reducing the volume of information to be exchanged between first and second nodes, and may be used in combination with, and as a complement to, other techniques for volume reduction such as compression etc. The communication cost reduction can be achieved for server-to-clients communication and also for clients-to-server communication.

Communication cost reduction, and consequent reduction in power consumption, are achieved by eliminating transfer of parameters values having little or no change between learning rounds. By freezing component parts of a model for which limited change has been observed, faster convergence of the overall model can also be achieved. The use of an intermediate or halt status, in which parameters may be updated but not provided by one node to another, offers an intermediate option between updating and exchanging parameters, and freezing entirely the update and exchange of parameters. In addition, any of the statuses described herein may be enhanced with updates to one or more hyperparameters, in order to further fine tune the learning process and adapt to circumstances including available bandwidth, processing resource, memory resource, etc. It will be appreciated that the present disclosure provides a very low overhead method. The size of the mask used to covey training statuses may be a small as 2 bit per component part (i.e., per layer of a NN), this value is negligible when compared with the amount of transmitted data.

As discussed above, the update rate of parameters during distributed learning could be controlled by dynamically changing the difference threshold, with for example a smaller threshold value used in early learning rounds (i.e., most component parts Active) and a larger threshold value used in the later rounds (i.e., to force more component parts to go to Halt or Freeze modes). Threshold values may also be set or changed dependent on required accuracy of the ML model, properties of the computer network in which the method is implemented, such as e.g. current network load when the method is performed in a communication network, or properties of the first or second node.

The methods of the present disclosure may be implemented in hardware, or as software modules running on one or more processors. The methods may also be carried out according to the instructions of a computer program, and the present disclosure also provides a computer readable medium having stored thereon a program for carrying out any of the methods described herein. A computer program embodying the disclosure may be stored on a computer readable medium, or it could, for example, be in the form of a signal such as a downloadable data signal provided from an Internet website, or it could be in any other form.

It should be noted that the above-mentioned examples illustrate rather than limit the disclosure, and that those skilled in the art will be able to design many alternative embodiments without departing from the scope of the appended claims or numbered embodiments. The word "comprising" does not exclude the presence of elements or steps other than those listed in a claim or embodiment, "a" or "an" does not exclude a plurality, and a single processor or other unit may fulfil the functions of several units recited in the claims or numbered embodiments. Any reference signs in the claims or numbered embodiments shall not be construed so as to limit their scope.

## Claims

1. A computer implemented method (100) for using Federated Learning to develop a Machine Learning, ML, model, the ML model comprising a plurality of component parts, and each component part comprising at least one trainable parameter, the method, performed by a first node of a computer network, comprising:
obtaining a reference version of the ML model (110);
receiving, from a second node in the computer network, a representation of an updated version of the ML model (120);
using at least the received representation to generate a current node version of the ML model (130); and
for each component part of the ML model (140i):
comparing trainable parameter values from the current node version of the ML model with corresponding trainable parameter values from the reference version of the ML model (140);
assigning a training status, selected from a candidate set of at least two training statuses, to the component part of the ML model according to a measure of difference between the compared trainable parameter values (150); and
informing the second node of the computer network of at least one of:
the assigned training status of the component part of the ML model;
the trainable parameter values from the current node version of the ML model (160). wherein a training status comprises an indication of at least one of (350i):
whether or not values of trainable parameters of the component part should be updated by either or both of the first node or the second node;
whether or not updated trainable parameter values should be provided by either or both of the first node or the second node to the other node.

2. A method as claimed in claim 1, wherein the candidate set of training statuses comprises at least two of active, halt, or freeze (350ii), wherein:
an active training status indicates that values of trainable parameters of the component part should be updated by each of the second node and the first node, and that each of the second node and first node should provide the updated parameter values to the first node and second node respectively;
a halt training status indicates that values of trainable parameters of the component part should be updated by each of the second node and the first node, and that only the second node should provide the updated values to the first node; and
a freeze training status indicates that values of trainable parameters of the component part should not be updated by either of the second or first nodes.

3. A method as claimed in claim 2, wherein, for each component part of the ML model, assigning a training status to the component part of the model according to a measure of difference between the compared trainable parameter values comprises one or more of:
if a measure of difference between the compared trainable parameter values is at or above a difference threshold (350a), assigning to the component part a status of active (350b);
if a measure of difference between the compared trainable parameter values is below a difference threshold (350a), assigning to the component part a training status of either halt or freeze (350c).
if a measure of difference between the compared trainable parameter values is below a difference threshold, and if a number of learning rounds for which the component part has had an assigned training status of halt is at or above a freeze threshold (350d), assigning to the component part a training status of freeze (350f).
if a measure of difference between the compared trainable parameter values is below a difference threshold, and if a number of learning rounds for which the component part has had an assigned training status of halt is below a freeze threshold (350d), assigning to the component part a training status of halt (350e).

4. A method as claimed in any one of the preceding claims, wherein assigning a training status to the component part of the ML model according to a measure of difference between the compared trainable parameter values comprises generating a mask of the ML model, the mask comprising an entry for each component part of the ML model, each entry indicating the assigned training status of the corresponding component part (350iii); and
wherein informing the second node of the computer network of at least one of:
the assigned training status of the component part of the ML model;
the trainable parameter values from the current node version of the ML model, comprises:
transmitting at least one of the mask entry or the trainable parameter values for the component part of the ML model from the current node version of the ML model to the second node (360a).

5. A method as claimed in any one of claims 2 to 4, wherein informing the second node of the computer network of at least one of:
the assigned training status of the component part of the ML model;
the trainable parameter values from the current node version of the ML model, comprises:
informing the second node of the trainable parameter values from the current node version of the ML model for only those component parts of the ML model having an assigned training status of active (360b).

6. A method as claimed in any one of claims 2 to 5, wherein receiving, from a second node in the computer network, a representation of an updated version of the ML model, comprises:
receiving from the second node updated values of trainable parameters for component parts of the ML model having an assigned training status of active or halt (320a).

7. A method as claimed in any one of the preceding claims, further comprising:
updating trainable parameter values in the reference version of the ML model to be the same as trainable parameter values in the current node version of the ML model (354).

8. A computer implemented method (200) for using Federated Learning to develop a Machine Learning, ML, model, the ML model comprising a plurality of component parts, and each component part comprising at least one trainable parameter, the method, performed by a second node of a computer network, comprising:
for each component part of the ML model (210i), receiving (210), from the first node, at least one of:
an assigned training status of the component part of the ML model, the assigned training status selected from a candidate set of at least two training statuses;
trainable parameter values for the component part of the ML model;
using at least the received training statuses and trainable parameter values to generate an updated version of the ML model (220); and
sending to the first node a representation of the updated version of the ML model (230);
wherein a training status comprises an indication of at least one of:
whether or not values of trainable parameters of the component part should be updated by either or both of the first node or the second node;
whether or not updated trainable parameter values should be provided by either or both of the first node or the second node to the other node.

9. A method as claimed in claim 8, wherein the candidate set of training statuses comprises at least two of active, halt, or freeze, wherein:
an active training status indicates that values of trainable parameters of the component part should be updated by each of the second node and the first node, and that each of the second node and first node should provide the updated parameter values to the first node and second node respectively;
a halt training status indicates that values of trainable parameters of the component part should be updated by each of the second node and the first node, and that only the second node should provide the updated values to the first node; and
a freeze training status indicates that values of trainable parameters of the component part should not be updated by either of the second or first nodes.

10. A method as claimed in claim 8 or 9, wherein for each component part of the ML model, receiving, from the first node, at least one of:
an assigned training status of the component part of the ML model, the assigned training status selected from a candidate set of at least two training statuses;
trainable parameter values for the component part of the ML model, comprises:
receiving at least one of a mask entry or the trainable parameter values for the component part of the ML model, the mask entry indicating the assigned training status of the component part of the ML model (410b).

11. A method as claimed in claim 9 or 10, wherein for each component part of the ML model, receiving, from the first node, at least one of:
an assigned training status of the component part of the ML model, the assigned training status selected from a candidate set of at least two training statuses;
trainable parameter values for the component part of the ML model, comprises:
receiving from the first node trainable parameter values for only those component parts of the ML model having an assigned training status of active (410c).

12. A method as claimed in any one of claims 9 to 11, wherein sending to the first node a representation of the updated version of the ML model comprises sending to the first node trainable parameter values from the updated version of the ML model for only those component parts of the ML model having an assigned training status of active or halt (430a).

13. A method as claimed in any one of claims 8 to 12, further comprising:
for each component part of the ML model:
comparing trainable parameter values from the updated version of the ML model with corresponding trainable parameter values from a previous node version of the ML model (422);
updating the assigned training status of the component part of the ML model according to a measure of difference between the compared trainable parameter values (424); and
sending the updated training statuses to the first node with the representation of the updated version of the ML mode (430).

14. A first node (500) for using Federated Learning to develop a Machine Learning, ML, model, the ML model comprising a plurality of component parts, and each component part comprising at least one trainable parameter, the first node comprising processing circuitry (502) configured to cause the first node to:
obtain a reference version of the ML model;
receive, from a second node in the computer network, a representation of an updated version of the ML model;
use at least the received representation to generate a current node version of the ML model; and
for each component part of the ML model:
compare trainable parameter values from the current node version of the ML model with corresponding trainable parameter values from the reference version of the ML model;
assign a training status, selected from a candidate set of at least two training statuses, to the component part of the ML model according to a measure of difference between the compared trainable parameter values; and
inform the second node of the computer network of at least one of:
the assigned training status of the component part of the ML model;
the trainable parameter values from the current node version of the ML model;
wherein a training status comprises an indication of at least one of:
whether or not values of trainable parameters of the component part should be updated by either or both of the first node or the second node;
whether or not updated trainable parameter values should be provided by either or both of the first node or the second node to the other node.

15. A second node (700) for using Federated Learning to develop a Machine Learning, ML, model, the ML model comprising a plurality of component parts, and each component part comprising at least one trainable parameter, the second node comprising processing circuitry (702) configured to cause the second node to:
for each component part of the ML model, receive, from the first node, at least one of:
an assigned training status of the component part of the ML model, the assigned training status selected from a candidate set of at least two training statuses;
trainable parameter values for the component part of the ML model;
use at least the received training statuses and trainable parameter values to generate an updated version of the ML model; and
send to the first node a representation of the updated version of the ML model;
wherein a training status comprises an indication of at least one of:
whether or not values of trainable parameters of the component part should be updated by either or both of the first node or the second node;
whether or not updated trainable parameter values should be provided by either or both of the first node or the second node to the other node.

## Patentansprüche

1. Computerimplementiertes Verfahren (100) zur Verwendung von Federated Learning zur Entwicklung eines Maschinenlernmodells (ML-Modell), wobei das ML-Modell eine Vielzahl von Komponententeilen umfasst und jeder Komponententeil mindestens einen trainierbaren Parameter umfasst, wobei das Verfahren, das durch einen ersten Knoten eines Computernetzwerks durchgeführt wird, Folgendes umfasst:
Erhalten einer Referenzversion des ML-Modells (110);
Empfangen, von einem zweiten Knoten in dem Computernetzwerk, einer Darstellung einer aktualisierten Version des ML-Modells (120);
Verwenden mindestens der empfangenen Darstellung zum Generieren einer aktuellen Knotenversion des ML-Modells (130); und
für jeden Komponententeil des ML-Modells (140i):
Vergleichen von Werten trainierbarer Parameter aus der aktuellen Knotenversion des ML-Modells mit entsprechenden Werten trainierbarer Parameter aus der Referenzversion des ML-Modells (140);
Zuweisen eines Trainingsstatus, ausgewählt aus einer Kandidatenmenge von mindestens zwei Trainingsstatus, zu dem Komponententeil des ML-Modells gemäß einem Maß für die Differenz zwischen den verglichenen Werten trainierbarer Parameter (150); und
Informieren des zweiten Knotens des Computernetzwerks über mindestens eines von Folgendem:
dem zugewiesenen Trainingsstatus des Komponententeils des ML-Modells;
den Werten trainierbarer Parameter aus der aktuellen Knotenversion des ML-Modells (160).
wobei ein Trainingsstatus eine Angabe von mindestens einem von Folgendem umfasst (350i):
ob Werte von trainierbaren Parametern des Komponententeils durch einen oder durch beide von dem ersten Knoten oder dem zweiten Knoten aktualisiert werden sollen oder nicht;
ob aktualisierte Werte von trainierbaren Parametern durch einen oder beide von dem ersten Knoten oder dem zweiten Knoten an den jeweils anderen Knoten bereitgestellt werden sollen oder nicht.

2. Verfahren nach Anspruch 1, wobei die Kandidatenmenge von Trainingsstatus mindestens zwei der Zustände "aktiv", "Halt" oder "einfrieren" (350ii) umfasst, wobei:
ein Trainingsstatus "aktiv" bedeutet, dass Werte von trainierbaren Parametern des Komponententeils durch jeden von dem zweiten und dem ersten Knoten aktualisiert werden sollen, und dass jeder von dem zweiten Knoten und dem ersten Knoten die aktualisierten Parameterwerte den ersten Knoten bzw. an zweiten Knoten bereitstellen soll.
ein Trainingsstatus "Halt" bedeutet, dass die Werte von trainierbaren Parametern des Komponententeils durch jeden von dem zweiten Knoten und dem ersten Knoten aktualisiert werden sollen, und dass nur der zweite Knoten die aktualisierten Werte an den ersten Knoten bereitstellen soll; und
ein Trainingsstatus "einfrieren" bedeutet, dass die Werte von trainierbaren Parametern des Komponententeils weder durch den zweiten Knoten noch durch den ersten Knoten aktualisiert werden sollen.

3. Verfahren nach Anspruch 2, wobei, für jeder Komponententeil des ML-Modells, das Zuweisen eines Trainingsstatus zu dem Komponententeil gemäß einem Maß für die Differenz zwischen den verglichenen Werten trainierbarer Parameter eines oder mehrere von Folgendem umfasst:
wenn ein Maß für die Differenz zwischen den verglichenen Werten trainierbarer Parameter bei oder über einem Differenzschwellenwert liegt (350a), Zuweisen eines Status "aktiv" zu dem Komponententeil (350b);
wenn ein Maß für die Differenz zwischen den verglichenen Werten trainierbarer Parameter unterhalb eines Differenzschwellenwerts liegt (350a), Zuweisen eines Trainingsstatus entweder "Halt" oder "Einfrieren" zu dem Komponententeil (350c);
wenn ein Maß für die Differenz zwischen den verglichenen Werten trainierbarer Parameter unterhalb eines Differenzschwellenwerts liegt, und wenn eine Anzahl von Lernrunden, für die dem Komponententeil der Trainingsstatus "Halt" zugewiesen wurde, einen Einfrierschwellenwert (350d) erreicht oder überschreitet, Zuweisen eines Trainingsstatus "Einfrieren" (350f) zu dem Komponententeil.
wenn ein Maß für die Differenz zwischen den verglichenen Werten trainierbarer Parameter unterhalb eines Differenzschwellenwerts liegt, und wenn eine Anzahl von Lernrunden, für die dem Komponententeil der Trainingsstatus "Halt" zugewiesen wurde, unterhalb eines Einfrierschwellenwerts (350d) liegt, Zuweisen eines Trainingsstatus "Halt" (350e) zu dem Komponententeil.

4. Verfahren nach einem der vorstehenden Ansprüche, wobei das Zuweisen eines Trainingsstatus zu dem Komponententeil des ML-Modells gemäß einem Maß für die Differenz zwischen den verglichenen Werten trainierbaren Parameter das Generieren einer Maske des ML-Modells umfasst, wobei die Maske für jeden Komponententeil des ML-Modells einen Eintrag enthält, wobei jeder Eintrag den zugewiesenen Trainingsstatus des entsprechenden Komponententeils angibt (350iii); und
wobei das Informieren des zweiten Knotens des Computernetzwerks über mindestens eines von:
dem zugewiesenen Trainingsstatus des Komponententeils des ML-Modells;
den Werten trainierbarer Parameter aus der aktuellen Knotenversion des ML-Modells Folgendes umfasst:
Übertragen mindestens eines von dem Maskeneintrag oder den Werten trainierbarer Parameter für den Komponententeil des ML-Modells aus der aktuellen Knotenversion des ML-Modells an den zweiten Knoten (360a).

5. Verfahren nach einem der Ansprüche 2 bis 4, wobei das Informieren des zweiten Knotens des Computernetzwerks über mindestens eines von:
dem zugewiesenen Trainingsstatus des Komponententeils des ML-Modells;
den Werten trainierbarer Parameter aus der aktuellen Knotenversion des ML-Modells Folgendes umfasst:
Informieren des zweiten Knotens über die Werte trainierbarer Parameter aus der aktuellen Knotenversion des ML-Modells nur für diejenigen Komponententeile des ML-Modells, denen der Trainingsstatus "aktiv" (360b) zugewiesen wurde.

6. Verfahren nach einem der Ansprüche 2 bis 5, wobei das Empfangen, von einem zweiten Knoten in dem Computernetzwerk, einer Darstellung einer aktualisierten Version des ML-Modells Folgendes umfasst:
Empfangen, von dem zweiten Knoten, aktualisierter Werte trainierbarer Parameter für Komponententeile des ML-Modells, denen der Trainingsstatus "aktiv" oder "Halt" (320a) zugewiesen wurde.

7. Verfahren nach einem der vorstehenden Ansprüche, ferner umfassend:
Aktualisieren von Werten trainierbarer Parameter in der Referenzversion des ML-Modells, sodass sie mit den Werten trainierbarer Parameter in der aktuellen Knotenversion des ML-Modells übereinstimmen (354).

8. Computerimplementiertes Verfahren (200) zur Verwendung von Federated Learning zur Entwicklung eines Maschinenlernmodells (ML-Modell), wobei das ML-Modell eine Vielzahl von Komponententeilen umfasst und jeder Komponententeil mindestens einen trainierbaren Parameter umfasst, wobei das Verfahren, das durch einen zweiten Knoten eines Computernetzwerks ausgeführt wird, Folgendes umfasst:
für jeden Komponententeil des ML-Modells (210i), Empfangen (210), von dem ersten Knoten, mindestens eines von Folgendem:
einem zugewiesenen Trainingsstatus des Komponententeils des ML-Modells, wobei der zugewiesene Trainingsstatus ausgewählt ist aus einer Kandidatenmenge von mindestens zwei Trainingsstatus;
Werten trainierbarer Parameter für den Komponententeil des ML-Modells;
Verwenden mindestens der empfangenen Trainingsstatus und Werte trainierbarer Parameter, um eine aktualisierte Version des ML-Modells zu generieren (220); und
Senden, an den ersten Knoten, einer Darstellung der aktualisierten Version des ML-Modells (230);
wobei ein Trainingsstatus eine Angabe von mindestens einem von Folgendem umfasst:
ob Werte von trainierbaren Parametern des Komponententeils durch einen oder durch beide von dem ersten Knoten oder dem zweiten Knoten aktualisiert werden sollen oder nicht;
ob aktualisierte Werte von trainierbaren Parametern durch einen oder beide von dem ersten Knoten oder dem zweiten Knoten an den jeweils anderen Knoten bereitgestellt werden sollen oder nicht.

9. Verfahren nach Anspruch 8, wobei die Kandidatenmenge von Trainingsstatus mindestens zwei der Zustände "aktiv", "Halt" oder "einfrieren" umfasst, wobei:
ein Trainingsstatus "aktiv" bedeutet, dass Werte von trainierbaren Parametern des Komponententeils durch jeden von dem zweiten und dem ersten Knoten aktualisiert werden sollen, und dass jeder von dem zweiten Knoten und dem ersten Knoten die aktualisierten Parameterwerte den ersten Knoten bzw. an zweiten Knoten bereitstellen soll.
ein Trainingsstatus "Halt" bedeutet, dass die Werte von trainierbaren Parametern des Komponententeils durch jeden von dem zweiten Knoten und dem ersten Knoten aktualisiert werden sollen, und dass nur der zweite Knoten die aktualisierten Werte an den ersten Knoten bereitstellen soll; und
ein Trainingsstatus "einfrieren" bedeutet, dass die Werte von trainierbaren Parametern des Komponententeils weder durch den zweiten Knoten noch durch den ersten Knoten aktualisiert werden sollen.

10. Verfahren nach Anspruch 8 oder 9, wobei für jeden Komponententeil des ML-Modells, Empfangen, von dem ersten Knoten, mindestens eines von Folgendem:
einem zugewiesenen Trainingsstatus des Komponententeils des ML-Modells, wobei der zugewiesene Trainingsstatus ausgewählt ist aus einer Kandidatenmenge von mindestens zwei Trainingsstatus;
Werten trainierbarer Parameter für den Komponententeil des ML-Modells, umfasst:
Empfangen von mindestens einem von einem Maskeneintrag oder den Werten trainierbarer Parameter für den Komponententeil des ML-Modells, wobei der Maskeneintrag den zugewiesenen Trainingsstatus des Komponententeils des ML-Modells angibt (410b).

11. Verfahren nach Anspruch 9 oder 10, wobei für jeden Komponententeil des ML-Modells, Empfangen, von dem ersten Knoten, mindestens eines von Folgendem:
einem zugewiesenen Trainingsstatus des Komponententeils des ML-Modells, wobei der zugewiesene Trainingsstatus ausgewählt ist aus einer Kandidatenmenge von mindestens zwei Trainingsstatus;
Werten trainierbarer Parameter für den Komponententeil des ML-Modells, umfasst:
Empfangen, von dem ersten Knoten, von Werten trainierbarer Parameter nur für diejenigen Komponententeile des ML-Modells, denen der Trainingsstatus "aktiv" (410c) zugewiesen wurde.

12. Verfahren nach einem der Ansprüche 9 bis 11, wobei das Senden einer Darstellung der aktualisierten Version des ML-Modells an den ersten Knoten das Senden, an den ersten Knoten, von Werten trainierbarer Parameter aus der aktualisierten Version des ML-Modells nur für diejenigen Komponententeile des ML-Modells umfasst, denen der Trainingsstatus "aktiv" oder "Halt" (430a) zugewiesen wurde.

13. Verfahren nach einem der Ansprüche 8 bis 12, weiter umfassend:
für jeden Komponententeil des ML-Modells:
Vergleichen von Werten trainierbarer Parameter aus der aktualisierten Version des ML-Modells mit den entsprechenden Werten trainierbarer Parameter aus einer früheren Knotenversion des ML-Modells (422);
Aktualisieren des zugewiesenen Trainingsstatus des Komponententeils des ML-Modells gemäß einem Maß für die Differenz zwischen den verglichenen Werten trainierbarer Parameter (424); und
Senden der aktualisierten Trainingsstatus an den ersten Knoten mit der Darstellung der aktualisierten Version des ML-Modus (430).

14. Erster Knoten (500) zur Verwendung von Federated Learning zur Entwicklung eines Maschinenlernmodells (ML-Modell), wobei das ML-Modell eine Vielzahl von Komponententeilen umfasst und jeder Komponententeil mindestens einen trainierbaren Parameter umfasst, wobei der erste Knoten eine Verarbeitungsschaltung (502) umfasst, die so konfiguriert ist, dass sie den ersten Knoten veranlasst zum:
Erhalten einer Referenzversion des ML-Modells;
Empfangen, von einem zweiten Knoten in dem Computernetzwerk, einer Darstellung einer aktualisierten Version des ML-Modells;
Verwenden mindestens der empfangenen Darstellung zum Generieren einer aktuellen Knotenversion des ML-Modells; und
für jeden Komponententeil des ML-Modells:
Vergleichen von Werten trainierbarer Parameter aus der aktuellen Knotenversion des ML-Modells mit entsprechenden Werten trainierbarer Parameter aus der Referenzversion des ML-Modells;
Zuweisen eines Trainingsstatus, ausgewählt aus einer Kandidatenmenge von mindestens zwei Trainingsstatus, zu dem Komponententeil des ML-Modells gemäß einem Maß für die Differenz zwischen den verglichenen Werten trainierbarer Parameter; und
Informieren des zweiten Knotens des Computernetzwerks über mindestens eines von Folgendem:
dem zugewiesenen Trainingsstatus des Komponententeils des ML-Modells;
den Werten trainierbarer Parameter aus der aktuellen Knotenversion des ML-Modells;
wobei ein Trainingsstatus eine Angabe von mindestens einem von Folgendem umfasst:
ob Werte von trainierbaren Parametern des Komponententeils durch einen oder durch beide von dem ersten Knoten oder dem zweiten Knoten aktualisiert werden sollen oder nicht;
ob aktualisierte Werte von trainierbaren Parametern durch einen oder beide von dem ersten Knoten oder dem zweiten Knoten an den jeweils anderen Knoten bereitgestellt werden sollen oder nicht.

15. Zweiter Knoten (700) zur Verwendung von Federated Learning zur Entwicklung eines Maschinenlernmodells (ML-Modell), wobei das ML-Modell eine Vielzahl von Komponententeilen umfasst und jeder Komponententeil mindestens einen trainierbaren Parameter umfasst, wobei der zweite Knoten eine Verarbeitungsschaltung (702) umfasst, die so konfiguriert ist, dass sie den zweiten Knoten veranlasst zum:
für jeden Komponententeil des ML-Modells, Empfangen, von dem ersten Knoten, mindestens eines von Folgendem:
einem zugewiesenen Trainingsstatus des Komponententeils des ML-Modells, wobei der zugewiesene Trainingsstatus ausgewählt ist aus einer Kandidatenmenge von mindestens zwei Trainingsstatus;
Werten trainierbarer Parameter für den Komponententeil des ML-Modells;
Verwenden mindestens der empfangenen Trainingsstatus und Werte trainierbarer Parameter, um eine aktualisierte Version des ML-Modells zu generieren; und
Senden, an den ersten Knoten, einer Darstellung der aktualisierten Version des ML-Modells;
wobei ein Trainingsstatus eine Angabe von mindestens einem von Folgendem umfasst:
ob Werte von trainierbaren Parametern des Komponententeils durch einen oder durch beide von dem ersten Knoten oder dem zweiten Knoten aktualisiert werden sollen oder nicht;
ob aktualisierte Werte von trainierbaren Parametern durch einen oder beide von dem ersten Knoten oder dem zweiten Knoten an den jeweils anderen Knoten bereitgestellt werden sollen oder nicht.

## Revendications

1. Procédé mis en œuvre par ordinateur (100) d'utilisation de l'apprentissage fédéré pour développer un modèle d'apprentissage automatique, ML, le modèle ML comprenant une pluralité de parties composantes, et chaque partie composante comprenant au moins un paramètre entraînable, le procédé étant exécuté par un premier nœud d'un réseau informatique, comprenant :
l'obtention d'une version de référence du modèle ML (110) ;
la réception, depuis un second nœud du réseau informatique, d'une représentation d'une version mise à jour du modèle ML (120) ;
l'utilisation d'au moins la représentation reçue pour générer une version de nœud actuelle du modèle ML (130) ; et
pour chaque partie composante du modèle ML (140i) :
la comparaison de valeurs de paramètres entraînables de la version de nœud actuelle du modèle ML avec des valeurs de paramètres entraînables correspondantes de la version de référence du modèle ML (140) ;
l'attribution d'un état d'entraînement, sélectionné parmi un ensemble candidat d'au moins deux états d'entraînement, à la partie composante du modèle ML selon une mesure de différence entre les valeurs de paramètres entraînables comparées (150) ; et
le signalement au second nœud du réseau informatique d'au moins un parmi :
l'état d'entraînement attribué à la partie composante du modèle ML ;
les valeurs de paramètres entraînables de la version de nœud actuelle du modèle ML (160) ;
dans lequel un état d'entraînement comprend une indication d'au moins un parmi (350i) :
si des valeurs de paramètres entraînables de la partie composante doivent ou non être mises à jour par le premier nœud ou le second nœud, ou par les deux ;
si des valeurs de paramètres entraînables mises à jour doivent être fournies par le premier nœud ou le second nœud, ou les deux, à l'autre nœud.

2. Procédé selon la revendication 1, dans lequel l'ensemble candidat d'états d'entraînement comprend au moins deux parmi actif, d'arrêt ou de gel (350ii), dans lequel :
un état d'entraînement actif indique que les valeurs de paramètres entraînables de la partie composante doivent être mises à jour par chacun du second nœud et du premier nœud, et que chacun du second nœud et du premier nœud doit fournir les valeurs de paramètres mises à jour au premier nœud et au second nœud respectivement ;
un état d'entraînement d'arrêt indique que les valeurs de paramètres entraînables de la partie composante doivent être mises à jour par chacun du second nœud et du premier nœud, et que seul le second nœud doit fournir les valeurs mises à jour au premier nœud ; et
un état d'entraînement de gel indique que les valeurs de paramètres entraînables de la partie composante ne doivent pas être mises à jour par les second ou premier nœuds.

3. Procédé selon la revendication 2, dans lequel, pour chaque partie composante du modèle ML, l'attribution d'un état d'entraînement à la partie composante du modèle selon une mesure de différence entre les valeurs de paramètres entraînables comparées comprend un ou plusieurs parmi :
si une mesure de différence entre les valeurs de paramètres entraînables comparées est égale ou supérieure à un seuil de différence (350a), l'attribution à la partie composante d'un état actif (350b) ;
si une mesure de différence entre les valeurs de paramètres entraînables comparées est inférieure à un seuil de différence (350a), l'attribution à la partie composante d'un état d'entraînement d'arrêt ou de gel (350c) ;
si une mesure de différence entre les valeurs de paramètres entraînables comparées est inférieure à un seuil de différence, et si un nombre de tours d'apprentissage pour lesquels la partie composante a eu un état d'entraînement d'arrêt attribué est égal ou supérieur à un seuil de gel (350d), l'attribution à la partie composante d'un état d'entraînement de gel (350f) ;
si une mesure de différence entre les valeurs de paramètres entraînables comparées est inférieure à un seuil de différence, et si un nombre de tours d'apprentissage pour lesquels la partie composante a eu un état d'entraînement d'arrêt attribué est inférieur à un seuil de gel (350d), l'attribution à la partie composante d'un état d'entraînement d'arrêt (350e).

4. Procédé selon l'une quelconque des revendications précédentes, dans lequel l'attribution d'un état d'entraînement à la partie composante du modèle ML selon une mesure de différence entre les valeurs de paramètres entraînables comparées comprend la génération d'un masque du modèle ML, le masque comprenant une entrée pour chaque partie composante du modèle ML, chaque entrée indiquant l'état d'entraînement attribué à la partie composante correspondante (350iii) ; et
dans lequel le signalement au second nœud du réseau informatique d'au moins un parmi :
l'état d'entraînement attribué à la partie composante du modèle ML ;
les valeurs de paramètres entraînables de la version de nœud actuelle du modèle ML, comprend :
la transmission d'au moins l'un parmi l'entrée de masque ou les valeurs de paramètres entraînables pour la partie composante du modèle ML de la version de nœud actuelle du modèle ML au second nœud (360a).

5. Procédé selon l'une quelconque des revendications 2 à 4, dans lequel le signalement au second nœud du réseau informatique d'au moins un parmi :
l'état d'entraînement attribué à la partie composante du modèle ML ;
les valeurs de paramètres entraînables de la version de nœud actuelle du modèle ML, comprend :
le signalement au second nœud des valeurs de paramètres entraînables de la version de nœud actuelle du modèle ML uniquement pour les parties composantes du modèle ML présentant un état d'entraînement actif attribué (360b).

6. Procédé selon l'une quelconque des revendications 2 à 5, dans lequel la réception, depuis un second nœud du réseau informatique, d'une représentation d'une version mise à jour du modèle ML comprend :
la réception, à partir du second nœud, de valeurs de paramètres entraînables mises à jour pour les parties composantes du modèle ML présentant un statut d'entraînement actif ou d'arrêt attribué (320a).

7. Procédé selon l'une quelconque des revendications précédentes, comprenant en outre :
la mise à jour de valeurs de paramètres entraînables dans la version de référence du modèle ML pour qu'elles soient identiques aux valeurs de paramètres entraînables dans la version de nœud actuelle du modèle ML (354).

8. Procédé mis en œuvre par ordinateur (200) d'utilisation de l'apprentissage fédéré pour développer un modèle d'apprentissage automatique, ML, le modèle ML comprenant une pluralité de parties composantes, et chaque partie composante comprenant au moins un paramètre entraînable, le procédé étant exécuté par un second nœud d'un réseau informatique, comprenant :
pour chaque partie composante du modèle ML (210i), la réception (210), depuis le premier nœud, d'au moins un parmi :
un état d'entraînement attribué de la partie composante du modèle ML, l'état d'entraînement attribué étant sélectionné parmi un ensemble candidat d'au moins deux états d'entraînement ;
des valeurs de paramètres entraînables pour la partie composante du modèle ML;
l'utilisation d'au moins les états d'entraînement reçus et des valeurs de paramètres entraînables pour générer une version mise à jour du modèle ML (220) ; et
l'envoi au premier nœud d'une représentation de la version mise à jour du modèle ML (230) ;
dans lequel un état d'entraînement comprend une indication d'au moins un parmi :
si des valeurs de paramètres entraînables de la partie composante doivent ou non être mises à jour par le premier nœud ou le second nœud, ou par les deux ;
si des valeurs de paramètres entraînables mises à jour doivent être fournies par le premier nœud ou le second nœud, ou les deux, à l'autre nœud.

9. Procédé selon la revendication 8, dans lequel l'ensemble candidat d'états d'entraînement comprend au moins deux parmi actif, d'arrêt ou de gel, dans lequel :
un état d'entraînement actif indique que les valeurs de paramètres entraînables de la partie composante doivent être mises à jour par chacun du second nœud et du premier nœud, et que chacun du second nœud et du premier nœud doit fournir les valeurs de paramètres mises à jour au premier nœud et au second nœud respectivement ;
un état d'entraînement d'arrêt indique que les valeurs de paramètres entraînables de la partie composante doivent être mises à jour par chacun du second nœud et du premier nœud, et que seul le second nœud doit fournir les valeurs mises à jour au premier nœud ; et
un état d'entraînement de gel indique que les valeurs de paramètres entraînables de la partie composante ne doivent pas être mises à jour par les second ou premier nœuds.

10. Procédé selon la revendication 8 ou 9, dans lequel, pour chaque partie composante du modèle ML, la réception, depuis le premier nœud, d'au moins un parmi :
un état d'entraînement attribué de la partie composante du modèle ML, l'état d'entraînement attribué étant sélectionné parmi un ensemble candidat d'au moins deux états d'entraînement ;
des valeurs de paramètres entraînables pour la partie composante du modèle ML, comprend :
la réception d'au moins l'un parmi une entrée de masque ou les valeurs de paramètres entraînables pour la partie composante du modèle ML, l'entrée de masque indiquant l'état d'entraînement attribué à la partie composante du modèle ML (410b).

11. Procédé selon la revendication 9 ou 10, dans lequel, pour chaque partie composante du modèle ML, la réception, depuis le premier nœud, d'au moins un parmi :
un état d'entraînement attribué de la partie composante du modèle ML, l'état d'entraînement attribué étant sélectionné parmi un ensemble candidat d'au moins deux états d'entraînement ;
des valeurs de paramètres entraînables pour la partie composante du modèle ML, comprend :
la réception, depuis le premier nœud, de valeurs de paramètres entraînables uniquement pour les parties composantes du modèle ML présentant un état d'entraînement actif attribué (410c).

12. Procédé selon l'une quelconque des revendications 9 à 11, dans lequel l'envoi au premier nœud d'une représentation de la version mise à jour du modèle ML comprend l'envoi au premier nœud de valeurs de paramètres entraînables de la version mise à jour du modèle ML uniquement pour les parties composantes du modèle ML présentant un état d'entraînement actif ou d'arrêt attribué (430a).

13. Procédé selon l'une quelconque des revendications 8 à 12, comprenant en outre :
pour chaque partie composante du modèle ML :
la comparaison de valeurs de paramètres entraînables de la version mise à jour du modèle ML avec des valeurs de paramètres entraînables correspondantes d'une version de nœud précédente du modèle ML (422) ;
la mise à jour de l'état d'entraînement attribué de la partie composante du modèle ML selon une mesure de différence entre les valeurs de paramètres entraînables comparées (424) ; et
l'envoi des états d'entraînement mis à jour au premier nœud avec la représentation de la version mise à jour du modèle ML (430).

14. Premier nœud (500) pour utiliser l'apprentissage fédéré pour développer un modèle d'apprentissage automatique, ML, le modèle ML comprenant une pluralité de parties composantes, et chaque partie composante comprenant au moins un paramètre entraînable, le premier nœud comprenant des circuits de traitement (502) configurés pour amener le premier nœud à :
obtenir une version de référence du modèle ML ;
recevoir, depuis un second nœud du réseau informatique, une représentation d'une version mise à jour du modèle ML ;
utiliser au moins la représentation reçue pour générer une version de nœud actuelle du modèle ML ; et
pour chaque partie composante du modèle ML :
comparer des valeurs de paramètres entraînables de la version de nœud actuelle du modèle ML avec des valeurs de paramètres entraînables correspondantes de la version de référence du modèle ML ;
attribuer un état d'entraînement, sélectionné parmi un ensemble candidat d'au moins deux états d'entraînement, à la partie composante du modèle ML selon une mesure de différence entre les valeurs de paramètres entraînables comparées ; et
signaler au second nœud du réseau informatique au moins un parmi :
l'état d'entraînement attribué à la partie composante du modèle ML ;
les valeurs de paramètres entraînables de la version de nœud actuelle du modèle ML;
dans lequel un état d'entraînement comprend une indication d'au moins un parmi :
si des valeurs de paramètres entraînables de la partie composante doivent ou non être mises à jour par le premier nœud ou le second nœud, ou par les deux ;
si des valeurs de paramètres entraînables mises à jour doivent être fournies par le premier nœud ou le second nœud, ou les deux, à l'autre nœud.

15. Second nœud (700) pour utiliser l'apprentissage fédéré pour développer un modèle d'apprentissage automatique, ML, le modèle ML comprenant une pluralité de parties composantes, et chaque partie composante comprenant au moins un paramètre entraînable, le second nœud comprenant des circuits de traitement (702) configurés pour amener le second nœud à :
pour chaque partie composante du modèle ML, recevoir, depuis le premier nœud, au moins un parmi :
un état d'entraînement attribué de la partie composante du modèle ML, l'état d'entraînement attribué étant sélectionné parmi un ensemble candidat d'au moins deux états d'entraînement ;
des valeurs de paramètres entraînables pour la partie composante du modèle ML;
utiliser au moins les états d'entraînement reçus et des valeurs de paramètres entraînables pour générer une version mise à jour du modèle ML ; et
envoyer au premier nœud une représentation de la version mise à jour du modèle ML ;
dans lequel un état d'entraînement comprend une indication d'au moins un parmi :
si des valeurs de paramètres entraînables de la partie composante doivent ou non être mises à jour par le premier nœud ou le second nœud, ou par les deux ;
si des valeurs de paramètres entraînables mises à jour doivent être fournies par le premier nœud ou le second nœud, ou les deux, à l'autre nœud.
